(19) Europäisches Patentamt
European Patent Office
Office européen des brevets

(11) EP 4 050 199 B1

(12) EUROPEAN PATENT SPECIFICATION

(45) Date of publication and mention of the grant of the patent:
**25.03.2026 Bulletin 2026/13**

(21) Application number: **20879440.4**

(22) Date of filing: **18.09.2020**

(51) International Patent Classification (IPC):
***F02P 17/12*** *(2006.01)* ***F02P 13/00*** *(2006.01)*
***F02P 5/15*** *(2006.01)* ***F02P 9/00*** *(2006.01)*
***F02B 19/08*** *(2006.01)* ***F02B 19/10*** *(2006.01)*
***F02B 19/12*** *(2006.01)* ***F02D 35/02*** *(2006.01)*
*F02P 3/04* *(2006.01)* *F02D 41/14* *(2006.01)*

(52) Cooperative Patent Classification (CPC):
**F02P 17/12; F02B 19/08; F02B 19/1023; F02B 19/12; F02D 35/02; F02P 5/15; F02P 9/007; F02P 13/00;** F02D 2041/1432; F02D 2200/021; F02D 2200/0418; F02D 2200/0602; F02D 2200/1015; F02D 2200/503; F02P 3/0414;
(Cont.)

(86) International application number:
**PCT/JP2020/035388**

(87) International publication number:
**WO 2021/079665 (29.04.2021 Gazette 2021/17)**

(54) **INTERNAL COMBUSTION ENGINE CONTROL DEVICE**
BRENNKRAFTMASCHINENSTEUERUNGSVORRICHTUNG
DISPOSITIF DE COMMANDE DE MOTEUR À COMBUSTION INTERNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.10.2019 JP 2019193196**

(43) Date of publication of application:
**31.08.2022 Bulletin 2022/35**

(73) Proprietor: **Astemo, Ltd.**
**Tokyo 100-0004 (JP)**

(72) Inventors:
- **SHIMADA, Atsushi**
  **Tokyo 100-8280 (JP)**
- **KUMANO, Kengo**
  **Tokyo 100-8280 (JP)**
- **SARUWATARI, Masayuki**
  **Hitachinaka-shi, Ibaraki 312-8503 (JP)**
- **ORYOJI, Kazuhiro**
  **Tokyo 100-8280 (JP)**
- **AONO, Toshihiro**
  **Tokyo 100-8280 (JP)**
- **KUSAKABE, Ryo**
  **Tokyo 100-8280 (JP)**

(74) Representative: **MERH-IP Matias Erny Reichl Hoffmann**
**Patentanwälte PartG mbB**
**Paul-Heyse-Straße 29**
**80336 München (DE)**

(56) References cited:
**EP-A1- 3 392 487**
**JP-A- 2002 276 519**
**JP-A- 2013 227 921**
**JP-A- 2015 190 338**
**JP-A- 2016 056 684**
**JP-A- 2016 094 854**
**JP-A- 2018 174 030**
**US-B2- 8 006 666**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
F02P 2017/121; Y02T 10/12

## Description

Technical Field

The present invention relates to an internal combustion engine control device.

Background Art

An engine for a power train of an automobile or the like is required to perform highly efficient combustion in order to reduce $CO_2$. Lean combustion under high excess air ratio and high exhaust gas recirculation (EGR) conditions has a high potential for improving thermal efficiency. Specifically, jet combustion in which flame combusted in a sub-combustion chamber (hereinafter, abbreviated as "sub-chamber") having an ignition plug therein is used as flame jets for ignition of an air-fuel mixture can perform highspeed combustion in a lean condition. For this reason, at present, jet combustion is practically used in a stationary large engine. In order to apply jet combustion to an engine with a displacement of 2L class of an automobile or the like, it is necessary to achieve combustion in a sub-combustion chamber which is a minute space of several cc under a wide range of operating conditions. Therefore, it is required to perform stable combustion in the sub-chamber.

A configuration disclosed in Patent Literature 1 is known for an engine provided with a sub-chamber. Patent Literature 1 discloses that "the ignition plug is attached to the cylinder head such that the plug cover protrudes from the cylinder head side to the combustion chamber to allow the ignition chamber and the combustion chamber to communicate with each other through the communication hole, and when an overload state in which a thermal load on the plug cover or the electrode becomes overload is determined, an operating condition of the engine is changed to reduce the thermal load on the plug cover or the electrode".

Citation List

Patent Literature

Patent Literature 1: JP 2011-196342 A
Patent Literature 2: US 8 006 666 B2
Patent Literature 3: JP 2016 094 854 A

Summary of Invention

Technical Problem

When the engine including the sub-chamber is used, a calorific value in the sub-chamber tends to be large.

For this reason, when the high-load operation of the automobile is continued, the temperature of an interior wall of the sub-chamber increases, and there is a risk that abnormal combustion (pre-ignition) may occur from the high-temperature portion.

Patent Literature 1 discloses that a cover of an ignition plug is attached, and in order to prevent occurrence of pre-ignition in which ignition cannot be controlled due to an overload state of a sub-chamber formed in the cover caused by heat, a sensor that detects a temperature or the like is installed near the sub-chamber to detect the overload state of an engine. However, in the ignition plug disclosed in Patent Literature 1, it is impossible to detect a state other than the overload state of the sub-chamber. In addition, it is necessary to detect a plurality of combustion states (for example, abnormal combustion conditions such as incomplete combustion, combustion instability, pre-ignition, and excessive pressure in a cylinder) occurring in the sub-chamber and to perform control according to the combustion state. However, in the sub-chamber for the ignition plug disclosed in Patent Literature 1, it is necessary to add a special sensor such as a pressure sensor that detects a pressure in the sub-chamber or a sensor that detects a discharge voltage, and the manufacturing cost of the ignition plug is likely to increase. Patent Literature 2 shows an internal combustion engine including a cylinder in which an air-fuel mixture is injected by a fuel injection device and a sub-combustion chamber, where an ignition plug injects a flame jet generated by igniting the air-fuel mixture inside the sub-combustion chamber into the main combustion chamber. Patent Literature 3 relates to a control device for an internal combustion engine, wherein a compression cylinder at engine start is detected and an engine start is performed by fuel injection.

The present invention has been made in view of such a situation, and it is an object of the present invention to determine a plurality of combustion states in a sub-chamber without providing a new sensor or the like in the ignition plug and control an operation of an internal combustion engine including the sub-chamber having the ignition plug therein.

Solution to Problem

The object of the present invention is solved according to the features of independent claim 1. The dependent claims relate to advantageous embodiments of the invention.

Advantageous Effects of Invention

According to the present invention, it is possible to estimate the intensity of the flame jet generated in the sub-combustion chamber without providing a new sensor or the like in the ignition plug. Therefore, it is possible to control the operation of the internal combustion engine including the sub-chamber having the ignition plug therein on the basis of a combustion state inside the sub-combustion chamber determined from the intensity of the flame jet.

Problems, configurations, and effects other than those described above will be clarified by the following description of embodiments.

Brief Description of Drawings

Fig. 1 is a schematic configuration diagram illustrating a configuration example of an engine according to a first embodiment of the present invention.
Fig. 2 is a control block diagram illustrating a configuration example of an electronic control unit (ECU) according to the first embodiment of the present invention.
Fig. 3 is a diagram illustrating an installation example of an ignition plug and an ignition device according to the first embodiment of the present invention.
Fig. 4 is a block diagram illustrating an internal configuration example of an engine control circuit according to the first embodiment of the present invention.
Fig. 5 is a time chart illustrating how the ignition device is controlled and how the ignition plug having a sub-chamber is combusted according to the first embodiment of the present invention.
Fig. 6 is a configuration diagram schematically illustrating the ignition device according to the first embodiment of the present invention.
Fig. 7 is a diagram illustrating a relationship between a primary voltage after breakdown and jet intensity at the time of ignition generated by the ignition plug according to the first embodiment of the present invention.
Fig. 8 is a diagram illustrating how the primary voltage changes depending on a sub-chamber temperature according to the first embodiment of the present invention.
Fig. 9 is a diagram illustrating an example of a pressure history (42 cycle average) in a main chamber according to the first embodiment of the present invention.
Fig. 10 is a diagram illustrating pressure change for 42 cycles in the main chamber according to the first embodiment of the present invention.
Fig. 11 is a diagram illustrating how the primary voltage of the ignition device changes depending on a change in a maximum pressure according to the first embodiment of the present invention.
Fig. 12 is a diagram illustrating a relationship between an ignition signal and the primary voltage of the ignition device according to the first embodiment of the present invention.
Fig. 13 is a block diagram illustrating an internal configuration example of an amplitude detection circuit according to the first embodiment of the present invention.
Fig. 14 is a diagram illustrating how the primary voltage of the ignition device according to the first embodiment of the present invention fluctuates and how a band pass filter and a differential filter output.
Fig. 15 is a graph illustrating output characteristics of the band pass filter according to the first embodiment of the present invention.
Fig. 16 is a graph illustrating output characteristics of the differential filter according to the first embodiment of the present invention.
Fig. 17 is a diagram illustrating an example of jet intensity classified into a level according to the jet intensity and jet intensity fluctuation according to the first embodiment of the present invention.
Fig. 18 is a flowchart illustrating an example of processing in which the engine control circuit according to the first embodiment of the present invention determines the level of jet intensity in the engine and corrects a control amount.
Fig. 19 is a diagram illustrating an example of a graph referred to for determining pre-air-warming or post-air-warming for jet combustion according to the first embodiment of the present invention.
Fig. 20 is a diagram illustrating a configuration example of an engine including a jet combustion system and a spark combustion system according to a second embodiment of the present invention.
Fig. 21 is a flowchart illustrating an example of processing in which an engine control circuit according to the second embodiment of the present invention determines the level of jet intensity in the engine and corrects a control amount.

Description of Embodiments

Hereinafter, embodiments of the present invention will be described with reference to the accompanying drawings. In the present specification and the drawings, components having substantially the same function or configuration are denoted by the same reference numerals, and redundant description is omitted.

[First Embodiment]

First, a configuration example of an engine 1 including a spark ignition type internal combustion engine used in an automobile and a control device of the internal combustion engine will be described with reference to Figs. 1 and 2.

Fig. 1 is a schematic configuration diagram illustrating the configuration example of the engine 1.

An air flow sensor 2, humidity sensors 3a and 3b, a compressor 15a, an intercooler 7, and an electronically controlled throttle 4 included in the engine 1 are provided at appropriate positions of an intake pipe 31.

The air flow sensor 2 measures an intake air amount and an intake air temperature.

A humidity detection unit (humidity sensors 3a and 3b) detects the humidity of gas introduced into a cylinder.

Therefore, the humidity sensors 3a and 3b can detect intake air humidity, that is, a moisture amount in an air-fuel mixture of air and an EGR gas. The intake air flowing into the cylinder of the engine 1 is referred to as "gas", and the gas mixed with fuel in the cylinder is referred to as "air-fuel mixture".

The humidity sensor 3a is provided near the air flow sensor 2, and can detect the humidity of the intake air. The humidity sensor 3b is provided in a surge tank 6, and can detect the humidity of the air stored in the surge tank 6.

The compressor 15a is provided as a part of a supercharger that supercharges air into the cylinder.

The intercooler 7 cools the air.

The electronically controlled throttle 4 adjusts an amount of air supplied into the cylinder and the pressure in the intake pipe 31.

The engine 1 also includes an in-cylinder fuel injection device (injector 13) that directly injects gasoline fuel into a cylinder 14 of each cylinder. The injector 13 used as the in-cylinder fuel injection device is a direct injection (DI) type, but may be a type of supplying to the intake pipe 31 (port fuel injection (PFI)). In addition, the injector 13 of the direct injection type and the injector 13 of the type of supplying to the intake pipe 31 may be combined.

The engine 1 includes an ignition plug 40 and an ignition device 50 for each cylinder. The engine 1 is an example of an in-cylinder injection type internal combustion engine for an automobile that performs spark ignition combustion in which a flame jet is generated in a sub-chamber 42 (see Fig. 3 to be described later) of the ignition plug 40 using the ignition device 50 and an air-fuel mixture in the cylinder 14 is ignited by the flame jet. A control device (ECU 20) according to the present embodiment includes an engine control unit (engine control circuit 24) that supplies a primary voltage to a primary side of the ignition device (ignition device 50) provided in the internal combustion engine (engine 1) and controls ignition of the air-fuel mixture in which gas sucked into the cylinder of the internal combustion engine (engine 1) and fuel are mixed by the flame jet generated in the sub-chamber 42 of an ignition plug (ignition plug 40). The internal combustion engine control device (ECU 20) controls output of the internal combustion engine (engine 1).

A configuration of the engine control circuit 24 is illustrated in Fig. 4 to be described later. The control device of the engine 1 corresponds to an electronic control unit (ECU) 20 that controls the engine 1.

A cylinder head includes a variable valve 5a that adjusts a flow rate of the air-fuel mixture flowing into the cylinder and a variable valve 5b that adjusts a flow rate of exhaust gas discharged from the cylinder. The variable valve 5a changes the timing at which an intake valve 32 provided in the engine 1 operates. The variable valve 5b changes the timing at which an exhaust valve 34 provided in the engine 1 operates. The operations of the variable valves 5a and 5b are adjusted by the ECU 20, whereby the intake amount and an internal EGR gas amount of all cylinders are adjusted.

Although not illustrated, a high-pressure fuel pump for supplying high-pressure fuel to the injector 13 is connected to the injector 13 via a fuel pipe. A fuel pressure sensor for measuring a fuel injection pressure is provided in the fuel pipe. A crank angle sensor 19 for detecting a piston position of the engine 1 is attached to a crankshaft.

Output information of the fuel pressure sensor and the crank angle sensor 19 is sent to the ECU 20.

Furthermore, an air-fuel ratio sensor 9, a three-way catalyst 10, an electronically controlled wastegate valve 11, and a turbine 15b included in the engine 1 are provided at appropriate positions of an exhaust pipe 33.

The air-fuel ratio sensor 9 is an aspect of an air-fuel ratio detector, detects the air-fuel ratio of the exhaust gas on an upstream side of the three-way catalyst 10, and outputs output information including the detected air-fuel ratio of the exhaust gas to the ECU 20. The exhaust pipe 33 may be provided with an O2 sensor 8 capable of detecting an air amount in the exhaust gas instead of the air-fuel ratio sensor 9, and output output information including the detected air amount to the ECU 20.

The three-way catalyst 10 purifies the exhaust gas flowing through the exhaust pipe 33. In the three-way catalyst 10, a catalyst heater 16 for warming the three-way catalyst 10 at a predetermined timing under the control of the ECU 20 is installed.

The electronically controlled wastegate valve 11 adjusts the flow rate of the exhaust gas flowing to the turbine 15b.

The turbine 15b applies a rotational force to the compressor 15a of the supercharger by exhaust energy.

The engine 1 also includes an EGR pipe 25 for recirculating the exhaust gas from a downstream of the three-way catalyst 10 to an upstream of the compressor 15a of the intake pipe 31. An EGR cooler 27 for cooling the EGR gas and an EGR valve 26 for controlling an EGR gas flow rate are attached at appropriate positions of the EGR pipe 25. The EGR gas is supplied to the intake pipe 31 via the EGR cooler 27, the EGR valve 26, the compressor 15a, the intercooler 7, and the electronically controlled throttle 4.

In addition, the engine 1 is provided with a temperature sensor 18 that measures the temperature of cooling water circulating in the engine 1.

Output information obtained from the air flow sensor 2, the humidity sensors 3a and 3b, the temperature sensor 18, and the air-fuel ratio sensor 9 described above is sent to the ECU 20. Furthermore, output information obtained from an accelerator opening sensor 12 is sent to the ECU 20. The accelerator opening sensor 12 detects a depression amount of an accelerator pedal, that is, an accelerator opening.

The ECU 20 calculates a required torque on the basis of the output information of the accelerator opening sensor 12. That is, the accelerator opening sensor 12 is used as a required torque detection sensor that detects the required torque to the engine 1. The ECU 20 optimally calculates main operation amounts of the engine 1 such as an air flow rate, a fuel injection amount, an ignition timing, a fuel pressure, and the EGR gas flow rate on the basis of the operation state of the engine 1 obtained from the output information of the various sensors described above.

The fuel injection amount calculated by the ECU 20 is converted into a valve opening pulse signal and sent to the injector 13. In addition, the ignition signal is sent to the ignition device 50 to cause ignition at the ignition timing calculated by the ECU 20. A throttle opening calculated by the ECU 20 is sent as a throttle drive signal to the electronically controlled throttle 4.

The injector 13 injects fuel into the air flowing into the cylinder from the intake pipe 31 through the intake valve 32 to form the air-fuel mixture. The air-fuel mixture explodes by a flame jet 44 (see Fig. 3 to be described later) generated in the sub-chamber 42 (see Fig. 3 to be described later) of the ignition plug 40 at a predetermined ignition timing, and pushes down a piston 35 by its combustion pressure to become a driving force of the engine 1. Furthermore, the exhaust gas after the explosion is sent to the three-way catalyst 10 via the exhaust pipe 33, and exhaust components are purified in the three-way catalyst 10 and discharged to the outside.

A detailed internal configuration example and an operation example of such engine 1 will be described below.

Fig. 2 is a control block diagram illustrating the internal configuration example of the ECU 20.

The ECU 20 includes an input circuit 21, an input/output port 22, a central processing unit (CPU) 23a, a read-only memory (ROM) 23b, a random-access memory (RAM) 23c, and the engine control circuit 24.

Input signals such as accelerator depression information (accelerator opening) from the accelerator opening sensor 12, a rotation speed of the engine 1, humidity information from the humidity sensors 3a and 3b, air amount information from the air flow sensor 2, and angle information (crank angle) from the crank angle sensor 19 are input to the input circuit 21 of the ECU 20. In addition, the input signals indicating a primary voltage and a secondary voltage detected by a voltage sensor of the ignition device 50, and a primary current and a secondary current detected by a current sensor of the ignition device 50 are input to the input circuit 21. An input signal indicating at least one of the primary voltage, the secondary voltage, the primary current, and the secondary current is referred to as "ignition device information". However, the input signals input to the input circuit 21 are not limited to these signals, and thus, will be appropriately added and described.

The input information indicated by each input signal input to the input circuit 21 is sent to the input port in the input/output port 22. The input information sent to the input/output port 22 is temporarily stored in the RAM 23c, and arithmetic processing is performed by the CPU 23a according to a predetermined control program. The control program describing the contents of the arithmetic processing is written in the ROM 23b in advance, and is read and executed by the CPU 23a as appropriate.

The output information indicating the operation amounts to the injector 13 and the ignition device 50 calculated according to the control program is temporarily stored in the RAM 23c. Thereafter, the output information is sent to the output port in the input/output port 22, and the injector 13, the ignition device 50, and the like are operated through the respective drive circuits. Although actuators other than these are also used in the engine 1, description thereof is omitted here.

The ECU 20 includes the engine control circuit 24 that controls the operation of the engine 1 including the drive circuit of the ignition device 50. The engine control circuit 24 controls an ignition energization time to the ignition device 50, the ignition timing at which the air-fuel mixture is ignited in the sub-chamber 42 of the ignition plug 40, and the like, and also controls the operation of each unit included in the engine 1. In the present embodiment, the engine control circuit 24 is included in the ECU 20, but the present invention is not limited to this configuration. For example, a part of the engine control circuit 24 or the entire engine control circuit 24 may be mounted on a device different from the ECU 20.

Then, the ECU 20 performs control to ignite the air-fuel mixture in the cylinder 14 by a flame jet generated by igniting the air-fuel mixture in the sub-chamber 42 (Fig. 3 to be described later) of the ignition plug 40 by energizing the ignition device 50 at an appropriate timing (ignition energization time or ignition timing) according to the air amount, the crank angle, a cooling water temperature, the intake air temperature, the humidity, and the like detected by each sensor.

<Configuration Example of Engine Including Sub-Chamber Including Ignition Plug therein>

Next, a configuration example and an operation example of the ignition plug 40 according to the first embodiment will be described with reference to Fig. 3. In the present embodiment, a configuration in which a sub-chamber forming member 45 forming the sub-chamber 42 is attached to the ignition plug 40 and the ignition plug 40 integrated with the sub-chamber forming member 45 is attached to the engine 1 will be described. However, the present invention is not limited to this configuration, and the sub-chamber forming member 45 forming the sub-chamber 42 may be attached to the engine 1, and the ignition plug 40 may be attached to the sub-chamber forming member 45. Any of these configurations will be described with reference to Fig. 3.

Fig. 3 is a diagram illustrating the installation example of the ignition plug 40 and the ignition device 50 according to the first embodiment.

The internal combustion engine (engine 1) includes: a cylinder (cylinder 14) in which an air-fuel mixture in which fuel injected by the fuel injection device (injector 13) and air taken in from an intake system (intake pipe 31) are mixed is combusted in a main combustion chamber (main chamber 37) facing a piston (piston 35); a sub-combustion chamber (sub-chamber 42) that communicates with the main combustion chamber (main chamber 37) and takes in the air-fuel mixture from the main combustion chamber (main chamber 37); the ignition plug (ignition plug 40) that is attached inside the sub-combustion chamber (sub-chamber 42) and injects a flame jet (flame jet 44) generated by igniting the air-fuel mixture inside the sub-combustion chamber (sub-chamber 42) into the main combustion chamber (main chamber 37) to ignite the air-fuel mixture in the main combustion chamber (main chamber 37); and the ignition device (ignition device 50) that includes a primary coil (primary coil 63 (see Fig. 6 to be described later)) and a secondary coil (secondary coil 64 (see Fig. 6 to be described later)) and supplies a secondary current to the ignition plug (ignition plug 40) at a predetermined ignition timing. The ignition device 50 that applies a high voltage to the ignition plug 40 is installed immediately near the ignition plug 40 and controls the ignition timing of the ignition plug (ignition plug 40). An electrode 41 of the ignition plug 40 is connected to the sub-chamber 42, and the sub-chamber 42 is connected to the main chamber 37.

The ignition device 50 that applies a high voltage to the ignition plug 40 is connected to the ignition plug 40. The ignition device 50 is wired to the ECU 20. A system configuration including the ignition device 50 and the ignition plug 40 including the main chamber 37 and the sub-chamber 42 such that the flame jet 44 is injected from the sub-chamber 42 to the main chamber 37 to enable the air-fuel mixture in the main chamber 37 to be combusted, is referred to as a "jet combustion system 55".

The injector 13 is provided on a side wall of the cylinder 14. The injector 13 performs fuel injection according to a fuel injection command output from the ECU 20. The air-fuel mixture in which the air taken in from the intake pipe 31 and the fuel injected from the injector 13 are mixed is supplied to the main chamber 37. The air-fuel mixture is introduced into the main chamber 37 from the moment when the piston 35 provided in the cylinder 14 of the engine is lowered and the intake valve 32 is opened. Note that the injector 13 may be provided in the sub-chamber 42 of the jet combustion system 55.

The ignition plug 40 includes the electrode 41 (ground electrode and center electrode), and the electrode 41 is covered by the sub-chamber forming member 45 to form the sub-chamber 42 (an example of the sub-combustion chamber). In the sub-chamber 42, a sub-chamber heater 46 for warming the sub-chamber 42 at a predetermined timing under the control of the ECU 20 is installed. A sub-chamber cooler 47 for lowering a sub-chamber temperature is installed around the sub-chamber 42.

A cooling medium capable of effectively cooling the sub-chamber 42 is sealed in the sub-chamber cooler 47.

Driving of the sub-chamber heater 46 and the sub-chamber cooler 47 is controlled by an engine control unit 52 (see Fig. 4 to be described later) of the ECU 20.

The sub-chamber 42 is installed so as to penetrate into the main chamber 37. A plurality of holes 43 formed at a tip of the sub-chamber 42 are in the main chamber 37. In a compression stroke, the intake valve 32 is closed, and the air-fuel mixture compressed in the process of raising the piston 35 is taken into the sub-chamber 42 through the holes 43.

In a combustion stroke, the electrode 41 (ground electrode and center electrode) generates a spark discharge in the sub-chamber 42 by the high voltage applied to the ignition plug 40 by the ignition device 50. The flame generated in the sub-chamber 42 by the spark discharge passes through the plurality of holes 43. Then, in the main chamber 37, a plurality of flames having passed through the plurality of holes 43 are ejected as the flame jets 44, and the air-fuel mixture is ignited at multiple points. The air-fuel mixture ignited by the flame jets 44 rapidly expands to push down the piston 35 and generates engine torque. Thereafter, the piston 35 is raised, and the exhaust gas is discharged to the exhaust pipe 33 from the moment when the exhaust valve 34 is opened.

Next, an internal configuration example of the engine control circuit 24 included in the ECU 20 will be described.

Fig. 4 is a functional block diagram illustrating the internal configuration example of the engine control circuit 24.

The engine control circuit 24 includes a jet intensity estimating unit 51 and the engine control unit 52.

The jet intensity estimating unit (jet intensity estimating unit 51) estimates the intensity (hereinafter, referred to as "jet intensity") of the flame jets 44 generated in the sub-chamber 42 on the basis of the ignition device information input from the ignition device 50 to the ECU 20 as illustrated in Fig. 2. Specifically, the jet intensity estimating unit (jet intensity estimating unit 51) estimates the intensity of the flame jet (jet intensity) on the basis of at least one of a primary current applied to the primary coil (primary coil 63) of the ignition device (ignition device 50), a primary voltage applied to the primary coil (primary coil 63), the secondary current applied to the secondary coil (secondary coil 64), and a secondary voltage applied to the secondary coil (secondary coil 64). A configuration example of the primary coil 63 and the secondary coil 64 is illustrated in Fig. 6 to be described later.

The internal combustion engine control unit (engine control unit 52) controls the internal combustion engine (engine 1) on the basis of a combustion state inside the sub-combustion chamber (sub-chamber 42) determined based on the estimated intensity of the flame jet (jet intensity). Specifically, the engine control unit 52 determines the level of the jet intensity estimated by the jet intensity estimating unit 51. The level of the jet intensity is a value defined on the basis of the jet intensity and jet intensity fluctuation as illustrated in Fig. 17 to be described later, and the combustion state in the sub-chamber 42 can be determined on the basis of the level. In the present embodiment, three types of levels 1 to 3 are defined, but two types or a plurality of levels of four or more types may be defined. Then, the engine control unit 52 controls each unit of the engine 1 according to the determined level. Processing in which the engine control unit 52 controls each unit of the engine 1 will be described later with reference to Fig. 18 to be described later.

Next, specific examples of the estimation of the jet intensity, the level determination of the jet intensity, and the control of each unit of the engine 1 performed by the engine control circuit 24 will be described below.

First, how the ignition device 50 and the ignition plug 40 operate in the combustion stroke will be described.

Fig. 5 is a time chart illustrating how the ignition device 50 is controlled and how the ignition plug 40 having the sub-chamber 42 is combusted. States of the ignition device 50 and the ignition plug 40 transition in the order of states (1) to (6) in the drawing.

In state (1), air is introduced into the engine 1.

In state (2), an injection signal is turned on at time T1. The injector 13 supplies (injects) the fuel into the cylinder 14 within a period (pulse width W1) during which the injection signal is turned on.

In state (3), the air-fuel mixture is formed in the main chamber 37. A part of the air-fuel mixture is taken into the sub-chamber 42 from the first half of a compression process. When the air-fuel mixture is taken into the sub-chamber 42, an ignition signal is turned on by the control of the ignition device 50. In an on-period (W2) of the ignition signal, the primary voltage and the primary current of the ignition device 50 decrease.

The combustion stroke in the sub-chamber 42 includes the following states (4) and (5).

In state (4), the high voltage is applied to the electrode 41 in the sub-chamber 42 at a predetermined ignition timing when the ignition signal is turned off at time T2, and the air-fuel mixture is ignited. Then, a flame kernel formed in the sub-chamber 42 grows.

In state (5), flames (flame jets 44) that have passed through the holes 43 of the sub-chamber 42 are supplied to the main chamber 37.

In state (6), the air-fuel mixture in the main chamber 37 combusts by the flame jets 44 (main combustion). Then, the opening of the EGR valve 26 that has been controlled to be large through states (1) to (5) decreases.

<Problems of Jet Combustion, Definition and Importance of Jet Intensity>

As described above, in the jet combustion system 55, the flame kernel formed by breakdown (electrical breakdown) between the center electrode and the ground electrode of the ignition plug 40 mounted in the sub-chamber 42 grows, and an oxidation reaction occurs in the sub-chamber 42 to generate heat. Then, the generated gas (flame) is supplied to the main chamber 37 as jets (flame jets 44) from the holes 43 (injection ports) that are outlets of the sub-chamber 42.

A heat generation amount in the sub-chamber 42 depends on the temperature of the generated flame and the jet speed of the flame jets 44. Therefore, the temperature of the flame and the jet speed of the flame jets 44 affect the combustion speed and the heat generation amount in the combustion (main combustion) of the main chamber 37. As described above, since the heat generation amount in the sub-chamber 42 greatly affects the combustion state of the jet combustion system 55, the heat generation amount in the sub-chamber 42 is defined as "jet intensity" and described below.

From a viewpoint of reducing cooling loss, an internal volume of the sub-chamber 42 is formed to be small. For example, the internal volume of the sub-chamber 42 is desirably 1% or less of the internal volume of the main chamber 37. Therefore, in the engine 1 used in the automobile or the like, the volume of the sub-chamber 42 is a small space (minute space) of several cc. When a wall surface temperature in the sub-chamber 42 formed in such a small space and an air-fuel mixture condition in the sub-chamber 42 affect a growth state of the flame kernel (extinction or the like in the vicinity of the wall surface), the jet intensity changes. That is, if the jet combustion system 55 is used in the engine 1, it is necessary to estimate the jet intensity in order to achieve highly robust combustion. Therefore, in the engine control circuit 24 according to the present embodiment, the jet intensity of the flame jets 44 is estimated, and the combustion state in the sub-chamber 42 is determined according to the estimated jet intensity. Here, a method by which the jet intensity estimating unit 51 estimates the jet intensity will be described.

<Principle of Jet Intensity Estimation>

Although the main chamber 37 and the sub-chamber 42 are connected via the injection ports of the sub-chamber 42, the molecules, ions, pressure, and temperature in the sub-chamber 42 greatly change depending on the magnitude of the jet intensity, and as a result, the resistance at the time of breakdown between the center electrode and the ground electrode included in the electrode 41 of the ignition plug 40 changes.

Fig. 6 is a configuration diagram schematically illustrating the ignition device 50.

When a switch 62 is turned on, a primary voltage V1 is applied from a battery 61 to the primary coil 63 of the ignition device 50, and the primary current is supplied. At this time, charges are accumulated in a capacitor 65. When the switch 62 is turned off, a high voltage is generated in the secondary coil 64 of the ignition device 50, and the charges flowing out of the capacitor 65 are directed to a resistor 66 as the secondary current. A secondary voltage V2 generated by the secondary coil 64 is applied to the resistor 66 and the electrode 41, and breakdown occurs at the center electrode and the ground electrode of the electrode 41 to generate a spark.

When the resistance in the ignition device 50 changes at the time of breakdown, the secondary voltage (V2) of the ignition device 50 changes. Where the primary voltage of the ignition device 50 is V1, a number of windings of the primary coil 63 is N1, and a number of windings of the secondary coil 64 is N2, a relational expression (theoretical expression) between the primary voltage V1 and the secondary voltage V2 is expressed by the following expression (1).

$$V1/V2 = N1/N2 = n \ldots (1)$$

$$V1 = n \times V2$$

Expression (1) indicates that a change in the secondary voltage V2 appears in the primary voltage V1.

The spark generated at the electrode 41 ignites the air-fuel mixture in the sub-chamber 42 to combust the air-fuel mixture. Therefore, a chemical change of the air-fuel mixture occurs, and the molecular weight of the air-fuel mixture increases. When the molecular weight of the air-fuel mixture increases, the resistance between the center electrode and the ground electrode increases, so that the secondary voltage decreases. At this time, a decrease in the secondary voltage appears as a decrease in the primary voltage. In addition, since the resistance value in each unit of the ignition device 50 has been obtained in advance, the values of the primary current and the secondary current can also be obtained. Therefore, in the jet combustion system 55, the voltage sensor that measures the primary voltage of the primary coil 63 and the secondary voltage of the secondary coil 64, and the current sensor that measures the primary current supplied to the primary coil 63 and the secondary current supplied to the secondary coil 64 are provided. Then, a value of at least one control amount among the primary voltage, the primary current, the secondary voltage, and the secondary current measured by the respective sensors is output from the ignition device 50 to the engine control circuit 24 as ignition device information.

Next, how the primary voltage changes for different types of ignition plugs will be described.

Fig. 7 is a diagram illustrating a relationship between the primary voltage after breakdown and the jet intensity at the time of ignition generated by the ignition plug 40. Three types of graphs 71 to 73 illustrated in Fig. 7 illustrate changes in the primary voltage with respect to crank angles, where the horizontal axis represents the crank angle [deg. ATDC] and the vertical axis represents the primary voltage [V] of the ignition device 50. The battery voltage applied to the primary coil 63 as the primary voltage is, for example, 12 V.

The graphs 71 to 73 illustrate how the primary voltage changes in combustion systems having respective main chambers 37 of the same shape. Here, the graph 71 represents changes in the primary voltage when an ignition plug without the sub-chamber 42 performs conventional spark ignition (herein, referred to as conventional spark ignition (SI)).

The graph 72 represents changes in the primary voltage when the ignition plug 40 having the sub-chamber 42 with a small sub-chamber volume generates the flame jets 44 with low jet intensity. The on/off timing of the ignition signal corresponding to the graph 72 is indicated by a solid line chart on the upper side of Fig. 7.

The graph 73 represents changes in the primary voltage when the ignition plug 40 having the sub-chamber 42 with a large sub-chamber volume generates the flame jets 44 with high jet intensity. The on/off timing of the ignition signal corresponding to the graph 73 is indicated by a one-dot chain line chart on the upper side of Fig. 7.

Fig. 7 illustrates that the ignition timing differs depending on each ignition plug. For example, immediately after breakdown, the primary voltage of each ignition device 50 changes. The graph 71 indicates that the primary voltage immediately increases to the battery voltage. On the other hand, in each of the graphs 72 and 73, since jet combustion occurs, there is a change in the primary voltage that is not seen in the conventional SI (graph 71) in regions 72a and 73a.

Therefore, focusing on the graphs 72 and 73, the change in the primary voltage in the region 73a is larger than the change in the primary voltage in the region 72a. That is, as the jet intensity is larger, the change amount is larger. Therefore, the jet intensity estimating unit (jet intensity estimating unit 51) can estimate that the intensity of the flame jet (jet intensity) is larger as a change amount of the falling of the primary voltage after the energization of the primary coil (primary coil 63) is cut off is larger.

As illustrated in Fig. 7, in the jet combustion, immediately after ignition, a change in resistance of the air-fuel mixture existing in the vicinity of the ignition plug 40, which is not found in the conventional SI, occurs. It is considered that such a phenomenon occurs because a non-steady resistance change is observed immediately after ignition since the sub-chamber 42 is a minute space, and the amount of change in resistance depends on the jet intensity, whereas in the conventional SI, a non-steady resistance change is not observed since flame spreads in a wide space in the main chamber 37 immediately after ignition. Therefore, the influence of the jet intensity on the main combustion in the main chamber 37 will be examined.

<Influence on Jet Intensity and Main Combustion at Low Temperature>

Fig. 8 is a diagram illustrating how the primary voltage changes depending on the sub-chamber temperature. Graphs 81 and 82 illustrated in upper and lower parts of Fig. 8 illustrate changes in the primary voltage with respect to crank angles, where the horizontal axis represents the crank angle [deg. ATDC] and the vertical axis represents the primary voltage [V] of the ignition device 50.

The graph 81 illustrated on the upper side of Fig. 8 illustrates how the primary voltage changes when the sub-chamber temperature is 25°C, and the graph 82 illustrated on the lower side of Fig. 8 illustrates how the primary voltage changes when the sub-chamber temperature is 80°C. Both control conditions of the engine 1 are the same, and the ignition timing is about 700 [deg. ATDC].

As illustrated in a region 81a of the graph 81 and a region 82a of the graph 82, when the sub-chamber temperature differs, a large difference occurs in the behavior of the primary voltage immediately after ignition. Specifically, under the condition where the sub-chamber temperature is high, the amount of change in the primary voltage immediately after ignition increases. This is because, when the wall surface temperature of the sub-chamber 42 is low, a region where flame is extinguished is widened in the vicinity of the wall surface, and a quenching distance becomes long, so that the heat generation amount of flame generated in the sub-chamber 42 becomes small, and the jet intensity becomes low. On the other hand, when the wall surface temperature of the sub-chamber 42 is high, the jet intensity becomes high since the heat generation amount of the flame generated in the sub-chamber 42 is large, and thus the molecular weight of the air-fuel mixture increases as described above, and the resistance change increases. Since the jet intensity changes when the sub-chamber temperature differs as described above, different changes are detected also in the primary voltage as illustrated in the regions 81a and 82a of Fig. 8.

Fig. 9 is a diagram illustrating an example of a pressure history (42 cycle average) in the main chamber 37. Graphs 91 and 92 illustrated in upper and lower parts of Fig. 9 illustrate changes in cylinder pressure with respect to crank angles, where the horizontal axis represents the crank angle [deg. ATDC] and the vertical axis represents the cylinder pressure [MPa (pressure in the main chamber 37)]. Each of the graphs 91 and 92 illustrated in Fig. 9 represents changes in the cylinder pressure measured under the same conditions as those of each of the graphs 81 and 82 illustrated in Fig. 8.

As described above, the jet intensity is higher under the condition of the sub-chamber temperature of 80°C than under the condition of the sub-chamber temperature of 25°C. Therefore, it can be seen that the timing of the pressure increase in the main chamber 37 indicated in a region 91a of the graph 91 under the condition of the sub-chamber temperature of 25°C is earlier than the timing of the pressure increase in the main chamber 37 indicated in a region 92a of the graph 92 under the condition of the sub-chamber temperature of 80°C.

From this, it is indicated that when the sub-chamber temperature increases, the jet intensity increases, and thus the cylinder pressure also increases.

For this reason, the engine control circuit 24 can estimate the jet intensity on the basis of the change in the primary voltage of the ignition device 50, and as a result, can control the degree of constant volume of the jet combustion. That is, the engine control circuit 24 can grasp the change in the jet intensity due to the temperature change in the sub-chamber 42 such as the start and stop of the engine 1 on the basis of the change in the primary voltage of the ignition device 50, and can utilize the change in the jet intensity for the ignition timing and the energy control at the time of ignition.

<Cycle Fluctuation of Jet Intensity>

Next, a fluctuation in the jet intensity (referred to as "cycle fluctuation") and changes in the primary voltage of the ignition device 50 for each cycle of jet combustion will be described with reference to Figs. 10 and 11.

Fig. 10 is a diagram illustrating pressure change for 42 cycles in the main chamber 37. The engine 1 is under the conditions of 2000 revolutions per minute, an indicated mean effective pressure of 0.2 MPa, and a sub-chamber temperature of 34°C on average. Each graph illustrated in Fig. 10 illustrates changes in cylinder pressure with respect to crank angles, where the horizontal axis represents the crank angle [deg. ATDC] and the vertical axis represents the cylinder pressure [MPa].

The jet intensity does not take a constant value for each cycle. Here, 10 cycles in which the maximum pressure (Pmax) is large among 42 cycles are defined as a Pmax large cycle, and represented by a region 101. In addition, 10 cycles in which Pmax is small is defined as a Pmax small cycle, is represented by a region 103. In addition, 22 cycles in which Pmax is on average is defined as a Pmax average cycle, and represented by a region 102. In an engine not including the sub-chamber 42, normal combustion is performed in the vicinity of the region 102 represented by the Pmax average cycle.

Fig. 11 is a diagram illustrating how the primary voltage of the ignition device 50 changes depending on a change in the maximum pressure. Each graph illustrated in Fig. 11 illustrates changes in the primary voltage with respect to crank angles, where the horizontal axis represents the crank angle [deg. ATDC] and the vertical axis represents the primary voltage [V] of the ignition device 50.

The Pmax large cycle, the Pmax average cycle, and the Pmax small cycle in respective graphs represent values in the respective regions 101 to 103 illustrated in Fig. 10. Here, a graph 111 illustrated in Fig. 11 represents the Pmax large cycle by a solid line, a graph 112 represents the Pmax small cycle by a broken line, and a graph 113 represents the Pmax average cycle by a one-dot chain line.

The upper side of Fig. 11 illustrates that the ignition signal falls and is turned off when the crank angle is 700 [deg. ATDC]. When the ignition signal is turned off, the primary voltage of the ignition device 50 greatly fluctuates. As illustrated on the lower side of Fig. 11, the primary voltage changes between the crank angles of 701 to 702 [deg. ATDC]. From the graphs 111 to 113, it can be seen that the change in voltage immediately after ignition is large in the order of the Pmax large cycle, the Pmax average cycle, and the Pmax small cycle. Since the cycle in which the primary voltage changes is constant, the jet intensity estimating unit 51 illustrated in Fig. 4 can detect the fluctuation range (amplitude) of the primary voltage for estimating the jet intensity by utilizing a band pass filter or the like that outputs the primary voltage of a predetermined frequency.

<Method of Detecting Fluctuation Range of Primary Voltage>

Here, a method by which the jet intensity estimating unit 51 detects the fluctuation range of the primary voltage in order to estimate the jet intensity of the flame jets 44 will be described with reference to Figs. 12 to 16.

Fig. 12 is a diagram illustrating a relationship between an ignition signal and the primary voltage of the ignition device 50.

When the ignition signal (ignition pulse) is turned on, the primary voltage of the ignition device 50 decreases. The period during which the ignition signal is turned on is defined by a predetermined pulse width (W2) as illustrated in Fig. 5 described above. When the ignition signal is turned off, the primary voltage greatly fluctuates and then returns to the original value.

Here, it has been found that the time during which a peak and a valley occur in the primary voltage is about 80 $\mu$s.

However, the fluctuation range (amplitude) at the time of fluctuation of the primary voltage is unknown. Therefore, the jet intensity estimating unit 51 detects the amplitude of the primary voltage of the ignition device 50, that is, the fluctuation range of the primary voltage using an amplitude detection circuit 120 described below, and estimates the jet intensity.

Fig. 13 is a block diagram illustrating the internal configuration example of the amplitude detection circuit 120.

The amplitude detection circuit 120 includes a band pass filter 121, a minimum value extraction unit 122, a maximum value extraction unit 123, a detection window 124, and a primary voltage fluctuation range output unit 125. Processing by respective units of the amplitude detection circuit 120 is performed for each cycle.

The band pass filter 121 extracts a primary voltage in a predetermined band in order to emphasize a characteristic of the primary voltage input from the ignition device 50. Filter processing by the band pass filter 121 is started by a trigger that is a timing at which an ignition signal is turned off. Then, the band pass filter 121 outputs the extracted primary voltage to the minimum value extraction unit 122 and the maximum value extraction unit 123.

The minimum value extraction unit 122 extracts the minimum value of the primary voltage within an extraction period determined by the detection window 124.

The maximum value extraction unit 123 extracts the maximum value of the primary voltage within the extraction period determined by the detection window 124.

The primary voltage fluctuation range output unit 125 calculates a difference between the minimum value of the primary voltage extracted by the minimum value extraction unit 122 and the maximum value of the primary voltage extracted by the maximum value extraction unit 123, and outputs the difference as a primary voltage fluctuation range. This primary voltage fluctuation range is used as a value estimated as the jet intensity.

Here, an operation example of the amplitude detection circuit 120 will be described.

Fig. 14 is a diagram illustrating how the primary voltage of the ignition device 50 fluctuates and how the band pass filter 121 and a differential filter output. The horizontal axis in each drawing represents the crank angle.

The upper side of Fig. 14 illustrates how the primary voltage of the ignition device 50 fluctuates. The fluctuation of the primary voltage is as described above with reference to Fig. 11. Output values from the band pass filter 121 to which the primary voltage fluctuating in this manner is input are represented by a graph of a waveform illustrated in the center of Fig. 14. Note that, on the lower side of Fig. 14, a graph of a waveform illustrating output from the differential filter illustrated in Fig. 16 to be described later is illustrated.

For example, when a certain time Ds has elapsed from the rising of an ignition pulse, the amplitude detection circuit 120 starts searching for the minimum value and the maximum value with respect to the output from the band pass filter 121. The search for the minimum value of the output by the minimum value extraction unit 122 is performed in the section (length Dw) of the detection window 124, and when the section of the detection window 124 ends, the search for the minimum value also ends. Similarly, the search for the maximum value of the output by the maximum value extraction unit 123 is performed in the section of the detection window 124, but when the minimum value of the output is extracted by the minimum value extraction unit 122, the search for the maximum value also ends. Therefore, the search for the maximum value of the output may end earlier than the end of the section of the detection window 124.

Then, the primary voltage fluctuation range output unit 125 takes the difference between the searched maximum value and minimum value of the output to output the fluctuation range of the primary voltage of the ignition device 50. This primary voltage fluctuation range is used as an estimated jet intensity in the subsequent processing.

Fig. 15 is a graph illustrating output characteristics of the band pass filter 121. The band pass filter 121 can output the primary voltage in a range of set lower limit frequency and upper limit frequency. A center frequency is set in the middle between the lower limit frequency and the upper limit frequency. The lower limit frequency and the upper limit frequency are defined on the basis of the fluctuation in the primary voltage when the ignition plug 40 ignites the air-fuel mixture, which has been examined in advance.

Note that, in the configuration example illustrated in Fig. 13, the amplitude detection circuit 120 uses the band pass filter 121, but the differential filter may be used instead of the band pass filter 121.

Fig. 16 is a diagram illustrating an example of a graph illustrating output characteristics of a differential filter.

The primary voltage is output in the range of the lower limit frequency and the upper limit frequency according to the output characteristics of the differential filter illustrated in Fig. 16. How the differential filter outputs is illustrated in the graph on the lower side of Fig. 14 described above. The processing of extracting the maximum value and the minimum value of the primary voltage after the primary voltage is output from the differential filter is similar to the processing performed using the band pass filter 121.

<Level-Classification of Jet Intensity>

As described above, the jet intensity estimating unit 51 can estimate the jet intensity on the basis of a change in the primary voltage of the ignition device 50 that controls the ignition plug 40 for jet combustion. As a result, the engine control unit 52 can control the degree of constant volume and cycle change of the jet combustion. That is, the internal combustion engine control unit (engine control unit 52) can classify an average value of the intensity of the flame jets (jet intensity) into a predetermined region, determine the combustion state inside the sub-combustion chamber (sub-chamber 42) on the basis of the average value classified into each region and the fluctuation rate of the average value, and control the internal combustion engine (engine 1).

Here, a method of classifying the jet intensity into a level will be described.

Fig. 17 is a diagram illustrating an example of jet intensity classified into a level according to the jet intensity and jet intensity fluctuation. In Fig. 17, the horizontal axis represents the voltage fluctuation range (cycle average value) of the primary voltage of the ignition device 50, and the vertical axis represents the voltage fluctuation rate of the primary voltage of the ignition device 50. The voltage fluctuation range (cycle average value) of the primary voltage is read as jet intensity. The voltage fluctuation rate of the primary voltage is read as jet intensity fluctuation.

By calculating the voltage fluctuation range of the primary voltage, the engine control unit 52 determines whether the jet intensity belongs to any of the three levels (Levels 1, 2, and 3) or the jet intensity does not belong to any of the three levels. Such determination by classifying the jet intensity into the three levels is referred to as "level-classification". Specifically, the engine control unit 52 can classify the jet intensity into three regions based on the voltage fluctuation range of the primary voltage. If the jet intensity of each level deviates from a stable combustion region 131 surrounded by a thick frame in the drawing, misfire occurs or abnormal combustion such as pre-ignition occurs.

For example, in the case of Level 1 where the jet intensity is low, when the voltage fluctuation rate of the primary voltage is large or the jet intensity is small, that is, when the jet intensity is smaller than the voltage fluctuation range that is the lower limit of the stable combustion region 131, misfire occurs in the sub-chamber 42. Misfire is likely to occur when the engine 1 is under a low output condition or when the sub-chamber temperature is low. In addition, when the voltage fluctuation rate is equal to or larger than a threshold value th1 in the range of Level 1, misfire also occurs. Therefore, when the average value (cycle average value) is included in a first region (Level 1) and the fluctuation rate of the average value is equal to or larger than a first threshold value (threshold value th1), or when the average value (cycle average value) is smaller than the first region (Level 1), the internal combustion engine control unit (engine control unit 52) controls the internal combustion engine (engine 1) by selecting at least one of control of advancing the ignition timing and control of heating the sub-combustion chamber (sub-chamber 42) by a heating device (sub-chamber heater 46) installed in the sub-combustion chamber (sub-chamber 42).

In a case where the jet intensity is Level 2 larger than Level 1, when the voltage fluctuation rate is large, combustion occurs at a timing different from an appropriate ignition timing, so that pre-ignition, knocking, and the like occurs in the engine 1. The phenomenon in which the ignition timing becomes abnormal occurs when the sub-chamber temperature becomes equal to or higher than an assumed temperature at the time of transient change of a control parameter of the engine 1, such as at the time of acceleration or immediately after restart of the engine 1. In particular, when the jet intensity is in the range of Level 2 and the voltage fluctuation rate is equal to or larger than a threshold th2, abnormal combustion such as pre-ignition occurs. Therefore, when the average value (cycle average value) is included in a second region (Level 2) larger than the first region (Level 1) and the fluctuation rate of the average value is smaller than the first threshold value (threshold value th1) and is equal to or larger than a second threshold value (threshold value th2) smaller than the first threshold value (threshold value th1), the internal combustion engine control unit (engine control unit 52) controls the internal combustion engine (engine 1) by selecting at least one of control of retarding the ignition timing, control of cooling the sub-combustion chamber (sub-chamber 42) with a cooling medium, and control of changing an operating point (rotation speed, torque) of the internal combustion engine (engine 1).

In a case where the jet intensity is Level 3 larger than Level 2, when the cycle fluctuation is large, an event similar to that at Level 2 occurs. In addition, when the jet intensity is in the range of Level 3 and the voltage fluctuation rate is equal to or larger than a threshold th3, abnormal combustion such as pre-ignition occurs. In addition, when the voltage fluctuation range (cycle average value) becomes larger than the upper limit of the stable combustion region 131, the maximum pressure (Pmax) of the cylinder pressure becomes excessive, and the combustion sound of the engine 1 becomes large or the engine 1 may fail. The phenomenon in which the maximum pressure (Pmax) of the cylinder pressure becomes excessive occurs due to a change in the fuel property or the environmental temperature of the fuel used during the operation in a maximum output region of the engine 1, a secular change in parts, and the like. Therefore, when the average value (cycle average value) is included in a third region (Level 3) larger than the second region (Level 2) and the fluctuation rate of the average value is smaller than the second threshold value (threshold value th2) and is equal to or larger than a third threshold value (threshold value th3) smaller than the second threshold value (threshold value th2), or when the average value (cycle average value) is larger than the third region (Level 3), the internal combustion engine control unit (engine control unit 52) performs at least one of control of retarding the ignition timing, control of cooling the sub-combustion chamber (sub-chamber 42) with a cooling medium, and control of changing an operating point (rotation speed, torque) of the internal combustion engine (engine 1).

As described above, when the jet intensity or the jet intensity fluctuation deviates from the stable combustion region 131, the engine control circuit 24 controls the engine 1 by correcting to an appropriate control amount. When both the jet intensity and the jet intensity fluctuation are within the stable combustion region 131, the engine control circuit 24 determines that the combustion is normal. Then, when the average value (cycle average value) is included in the first region (Level 1) and the fluctuation rate is equal to or smaller than the first threshold value (threshold value th1), when the average value (cycle average value) is included in the second region (Level 2) and the fluctuation rate is equal to or smaller than the second threshold value (threshold value th2), or when the average value (cycle average value) is included in the third region (Level 3) and the fluctuation rate is equal to or smaller than the third threshold value (threshold value th3), the internal combustion engine control unit (engine control unit 52) controls the internal combustion engine (engine 1) by selecting at least one of control of increasing the opening of the exhaust gas recirculation valve (EGR valve 26), control of increasing the throttle opening, and control of increasing the fuel injection amount.

<Example of Processing by Engine Control Unit>

The internal combustion engine control unit (engine control unit 52) according to the present embodiment calculates the average value and the fluctuation rate of the average value in a set cycle of the falling of the primary voltage after the energization of the primary coil (primary coil 63) is cut off, and controls the ignition timing, the opening of the exhaust gas recirculation valve (EGR valve 26), the throttle opening, or the fuel injection amount on the basis of the average value and the fluctuation rate. Hereinafter, a specific example of processing by the engine control circuit 24 will be described.

Fig. 18 is a flowchart illustrating an example of processing in which the engine control circuit 24 determines the level of jet intensity in the engine 1 and corrects a control amount.

First, the jet intensity estimating unit 51 illustrated in Fig. 4 grasps the rotation speed, torque, A/F, and water temperature of the engine 1 (S1). The "water temperature" is a coolant temperature of a coolant for cooling the engine 1. On the basis of these pieces of information, the jet intensity estimating unit 51 determines ignition control (charge time and ignition timing of the primary coil 63), injection control (injection pulse width and injection timing), EGR valve opening, optimum jet intensity, upper and lower limit values of the jet intensity, and the maximum value of the fluctuation rate of the jet intensity change (S2).

Next, the jet intensity estimating unit 51 estimates the jet intensity (S3). The jet intensity is desirably estimated by the jet intensity estimating unit 51 detecting a change in the primary voltage of the ignition device 50 included in the ignition device information. However, the jet intensity estimating unit 51 may estimate the jet intensity by detecting a change in the primary current, the secondary current, or the secondary voltage of the ignition device 50 included in the ignition device information. When the jet intensity estimating unit 51 estimates the jet intensity, various control conditions are kept fixed.

Next, the engine control unit 52 determines the level of the jet intensity (S4). The level of the jet intensity is determined by the method illustrated in Fig. 17.

When it is determined that the jet intensity is Level 1, the engine control unit 52 performs warm-up determination for jet combustion (S5). The warm-up determination for jet combustion is performed on the basis of the relationship between the water temperature and the jet intensity, and determines pre-air-warming or post-air-warming. For example, when the voltage fluctuation rate of the primary voltage deviates from the stable combustion region 131 illustrated in Fig. 17 and misfire determination is made, the engine control unit 52 determines that the jet combustion is pre-air-warming.

Here, the relationship between the water temperature and the jet intensity will be described.

Fig. 19 is a diagram illustrating an example of a graph referred to for determining pre-air-warming or post-air-warming for jet combustion. In this graph, the horizontal axis represents the water temperature, and the vertical axis represents the voltage fluctuation range (cycle average value) of the primary voltage. A graph 141 illustrated in Fig. 19 indicates that, for example, from a water temperature WT0 immediately after the start of the engine 1 to a water temperature WT1 at the time of steady operation of the engine 1, the jet intensity, that is, the voltage fluctuation range of the primary voltage increases as the water temperature increases. It is indicated that the jet intensity, that is, the voltage fluctuation range of the primary voltage does not change at a water temperature higher than the water temperature WT1.

Therefore, if the values of the water temperature and the voltage fluctuation range of the primary voltage are in the region below the graph 141, the engine control unit 52 determines pre-air-warming. Therefore, if the values of the water temperature and the voltage fluctuation range of the primary voltage are in the region above the graph 141, the engine control unit 52 determines post-air-warming.

Specifically, the difference between the water temperature and the sub-chamber temperature increases and the jet intensity changes at the time of starting and stopping the engine 1 as compared with the time of steady operation of the engine 1. For example, when the sub-chamber temperature is high even if the water temperature is low, the jet intensity is equal to or higher than a predetermined jet intensity, and thus the engine control unit 52 determines that the sub-chamber 42 is in a post-warm-up state. In this case, the processing proceeds to step S9 as illustrated in Fig. 18. On the other hand, when the sub-chamber temperature is low even if the water temperature is high, the jet intensity is lower than the predetermined jet intensity, and thus the engine control unit 52 determines that the sub-chamber 42 is in a pre-warm-up state. In this case, the processing proceeds to step S6 as illustrated in Fig. 18.

When the sub-chamber 42 is determined to be in the pre-warm-up state, the engine control unit 52 switches to a warm-up operation mode (S6). In the warm-up operation mode, the engine control unit 52 performs warm-up control of increasing the temperature of the sub-chamber 42. The engine control unit 52 performs control (heating) to increase the temperature of the sub-chamber 42 by energizing the sub-chamber heater 46 illustrated in Fig. 3. In addition, the engine control unit 52 performs control to advance the ignition timing and increase the temperature of the sub-chamber 42. After step S6, the engine control circuit 24 performs return processing. In the return processing according to the present embodiment, the processing returns to step S1, and the processing illustrated in Fig. 18 is repeatedly performed.

When the engine control unit 52 performs the air-warming control of step S6, if it has been performing warm-up control of the three-way catalyst 10 mounted on the exhaust pipe 33 illustrated in Fig. 1 by already retarding the ignition timing, the warm-up control of the three-way catalyst 10 (described as "catalyst control" in the drawing) is preferentially performed. For example, in a configuration in which the catalyst heater 16 for heating is installed upstream of the three-way catalyst 10, the warm-up control of the three-way catalyst 10 is preferentially performed by heating the catalyst heater 16. Then, after air-warming of the three-way catalyst 10, the engine control unit 52 performs control such as advancement of the ignition timing.

When the sub-chamber 42 is determined to be in the post-warm-up state in step S5, the engine control unit 52 performs control for increasing thermal efficiency (high thermal efficiency control) (S9). Specifically, in order to optimize (minimize) ignition energy, the engine control unit 52 controls a charge time to the capacitor 65 (see Fig. 6). In addition, control of increasing the ratio of inert gas to the fuel (hereinafter, it is described as "G/F") is performed. The limit G/F described in the drawing represents control in which the engine control unit 52 searches for a value higher than the normal G/F. After step S9 the engine control circuit 24 performs the return processing.

The inert gas can be increased by the engine control unit 52 increasing any one or more of the EGR amount and an excess air amount supplied to the engine 1 or decreasing a fuel injection pulse width (W1). Furthermore, the EGR amount can be adjusted by the engine control unit 52 by control of increasing the opening of the EGR valve 26 (referred to as "EGR valve opening"). In addition, the excess air amount is adjusted by the engine control unit 52 by control of increasing the throttle opening of the electronically controlled throttle 4 to increase the air amount or increasing a supercharging pressure. During the high thermal efficiency control, the engine control unit 52 controls the ignition timing so that the jet intensity and the voltage fluctuation rate of the primary voltage fall within the stable combustion region 131 illustrated in Fig. 17.

When the jet intensity is determined to be Level 2 in step S4, the engine control unit 52 performs abnormal combustion determination of jet combustion according to Fig. 17 (S7). When it is determined that there is an abnormality in jet combustion, the engine control unit 52 makes pre-ignition determination (S8), and then performs the return processing as indicated by a connector A. In the pre-ignition determination, the engine control unit 52 performs forced cooling of the sub-chamber 42. The forced cooling of the sub-chamber 42 is performed by selecting at least one of control of retarding the ignition timing of the ignition plug 40, control of increasing the flow rate of the cooling medium in the vicinity of the sub-chamber 42 using the sub-chamber cooler 47, and control of lowering the temperature of the cooling medium for cooling the sub-chamber 42 using the sub-chamber cooler 47.

In addition, the engine control unit 52 controls the operating point (rotation speed, torque) of the engine 1 when the pre-ignition determination is made. For example, the engine control unit 52 can lower the temperature of the sub-chamber 42 by performing control of lowering the rotation speed and increasing the torque of the engine 1. When it is determined that there is no abnormality in the jet combustion in step S7, the processing proceeds to step S9 and the engine control unit 52 performs the high thermal efficiency control described above.

When the jet intensity is determined to be Level 3 in step S4, the engine control unit 52 performs abnormal combustion determination of jet combustion according to Fig. 17 (S10). When it is determined that there is an abnormality in the jet combustion, the engine control unit 52 makes pre-ignition determination or excessive Pmax determination (S11). At this time, as illustrated in Fig. 17, the engine control unit 52 determines the maximum pressure (Pmax) to be excessive when the jet intensity is larger than the stable combustion region 131, and determines pre-ignition when the jet intensity fluctuation is larger than the stable combustion region 131. After step S11, the engine control circuit 24 performs the return processing.

When the pre-ignition determination is made, the engine control unit 52 performs the same control as in step S8 described above. The engine control unit 52 also performs control of forcibly cooling a nozzle of the injector 13.

When the excessive Pmax determination is made, the engine control unit 52 performs high G/F control. Specifically, the engine control unit 52 performs at least one of control of increasing the opening of the EGR valve 26 to increase an EGR rate, control of increasing the air amount sucked into the engine 1, control of retarding the ignition timing of the ignition plug 40 installed in the sub-chamber 42, control of increasing the opening of the EGR valve 26, and control of narrowing the injection pulse width so as to reduce the amount of fuel supplied to the engine 1.

The engine control unit 52 can keep the jet intensity and the voltage fluctuation rate of the primary voltage in the stable combustion region 131 illustrated in Fig. 17 by performing each control indicated in step S11. As a result, it is possible to suppress an engine failure such as a piston ring failure due to pre-ignition and breakage of a mechanical part such as a connecting rod due to excessive Pmax.

The ECU 20 according to the first embodiment described above estimates, when controlling the operation of the engine 1 including the sub-chamber 42 and the main chamber 37, the jet intensity of the flame jets 44 generated in the sub-chamber 42 on the basis of the current and the voltage flowing through the ignition device 50 connected to the ignition plug 40 mounted in the sub-chamber 42. Here, it is possible to appropriately control a control target of the engine 1 on the basis of the combustion state inside the sub-combustion chamber determined by estimating the jet intensity by the ECU 20 without providing a new sensor or the like in the ignition plug 40.

Here, examples of the control target of the engine 1 include control of the ignition timing of the ignition plug 40, the fuel injection timing and injection amount of the injector 13, the EGR amount, and the air amount. The jet combustion system 55 configured at low cost can achieve highly robust combustion for suppressing misfire, combustion instability, pre-ignition, and a combustion pressure limit.

The jet intensity estimating unit 51 of the engine control circuit 24 according to the present embodiment estimates the jet intensity, and the engine control unit 52 performs level-classification of the estimated jet intensity. Then, the engine control unit 52 controls the operation of each unit of the engine 1 with an appropriate control amount for each Level. As described above, the engine control circuit 24 can operate the engine 1 with high efficiency by maximally applying the jet combustion system 55 including the ignition plug 40 having the sub-chamber 42 while achieving highly robust combustion in a wide operating range and an operating environment of the engine 1.

[Second Embodiment]

Next, a configuration example and a control example of an engine including a jet combustion system according to a second embodiment of the present invention will be described with reference to Figs. 20 and 21.

Fig. 20 is a diagram illustrating the configuration example of an engine 1A including the jet combustion system 55 and a spark combustion system 55A according to the second embodiment of the present invention.

An internal combustion engine (engine 1A) includes: a cylinder in which an air-fuel mixture in which fuel injected by the fuel injection device (injector 13) and air taken in from an intake system are mixed is combusted in the main combustion chamber (main chamber 37) facing a piston; a first ignition plug (ignition plug 40A) that is attached inside the main combustion chamber (main chamber 37) and ignites the air-fuel mixture in the main combustion chamber (main chamber 37); a first ignition device (ignition device 50A) that supplies a current to the first ignition plug (ignition plug 40A) at a first ignition timing; a sub-combustion chamber (sub-chamber 42) that communicates with the main combustion chamber (main chamber 37) and takes in the air-fuel mixture from the main combustion chamber (main chamber 37); a second ignition plug (ignition plug 40) that is attached inside the sub-combustion chamber (sub-chamber 42) and injects the flame jet (flame jet 44) generated by igniting the air-fuel mixture inside the sub-combustion chamber (sub-chamber 42) into the main combustion chamber (main chamber 37) to ignite the air-fuel mixture in the main combustion chamber (main chamber 37); and a second ignition device (ignition device 50) that includes the primary coil (primary coil 63 (see Fig. 6)) and the secondary coil (secondary coil 64 (see Fig. 6)) and supplies a secondary current to the ignition plug (ignition plug 40) at a second ignition timing. The internal combustion engine control device (ECU 20) according to the second embodiment controls output of the internal combustion engine (engine 1A).

Specifically, the jet intensity estimating unit (jet intensity estimating unit 51) according to the second embodiment estimates the intensity of the flame jet (jet intensity) on the basis of at least one of a primary current applied to the primary coil (primary coil 63) of the second ignition device (ignition device 50), a primary voltage applied to the primary coil (primary coil 63), a secondary current applied to the secondary coil (secondary coil 64), and a secondary voltage applied to the secondary coil (secondary coil 64). The internal combustion engine control unit (engine control unit 52) according to the second embodiment controls the internal combustion engine (engine 1A) on the basis of a combustion state inside the sub-combustion chamber (sub-chamber 42) determined on the basis of the estimated intensity of the flame jet (jet intensity).

The jet combustion system 55 included in the engine 1A has a configuration in which the sub-chamber 42 capable of jet combustion is provided on a side wall of the main chamber 37. In addition, the spark combustion system 55A included in the engine 1A has a configuration in which the ignition plug 40A having a conventional configuration without the sub-chamber 42 is provided on a top surface of the main chamber 37. An electrode 41A capable of igniting the air-fuel mixture, the electrode 41A being included in the ignition plug 40A, is provided to be exposed in the main chamber 37. Ignition or the like of the ignition plug 40A is controlled by the ignition device 50A connected to the ignition plug 40A. Although not illustrated, the spark combustion system 55A including the first ignition plug (ignition plug 40A) and the first ignition device (ignition device 50A) also includes the primary coil, the secondary coil, and the like having the same configuration as that in the jet combustion system 55 illustrated in Fig. 6.

As described above, the engine 1A has a configuration in which the ignition plugs 40 and 40A and the ignition devices 50 and 50A are installed for each cylinder. Fuel is supplied by the injector 13 connected to the intake pipe 31, and is introduced into the main chamber 37 when the intake valve 32 is opened. The operations of the injector 13, the intake valve 32, the exhaust valve 34, and the ignition devices 50 and 50A are individually controlled by the ECU 20.

The jet combustion system 55 according to the present embodiment utilizes the spark combustion system 55A having a conventional configuration when it is out of the range of the stable combustion region 131 illustrated in Fig. 17. In particular, by connecting the sub-chamber 42 of the jet combustion system 55 to the same position as the position of an injector of a direct injection type provided on a side wall of the main chamber 37 as in a conventional case, the ignition plug 40A of the spark combustion system 55A can be arranged at a conventional position near the center of the main chamber 37. Therefore, the combustion robustness can be further enhanced.

<Example of Processing by Engine Control Unit>

Fig. 21 is a flowchart illustrating an example of processing in which the engine control circuit 24 determines the level of jet intensity in the engine 1A and corrects a control amount. In the present embodiment, as illustrated in Fig. 20, each unit of the engine 1A is controlled using the jet combustion system 55 and the spark combustion system 55A. Note that the description of steps of the same processing as the processing already described with reference to Fig. 18 will be simplified or omitted.

First, the jet intensity estimating unit 51 illustrated in Fig. 4 grasps the rotation speed, torque, A/F, and water temperature of the engine 1A (S21). Next, the jet intensity estimating unit 51 determines a charge time and an ignition timing of the primary coil 63 for ignition control (S22). Here, the jet intensity estimating unit 51 prepares control maps of both jet combustion ignition control and conventional ignition control, and controls ignition in each combustion system. As illustrated in step S2 of Fig. 18, the jet intensity estimating unit 51 similarly determines the injection control, the EGR valve opening, and the like.

Thereafter, each processing of steps S23, S24, S25, S27, S28, and S30 is performed. These processing is similar to steps S3, S4, S5, S7, S8, and S10, respectively, in Fig. 18. After the processing of step S28, the engine control unit 52 performs the return processing as indicated by a connector B. Also in steps S26, S29, and S31 to be described later, the engine control unit 52 performs the return processing after the processing of each step ends.

Here, when out of the stable combustion region 131 illustrated in Fig. 17 is determined in steps S25, S27, and S30 and when the pre-warm-up determination illustrated in Fig. 19 is made, the engine control unit 52 performs conventional ignition combustion by the ignition plug 40A in steps S26, S28, and S31 (in the drawing, it is described as "conventional ignition control").

On the other hand, the engine control unit 52 performs control by jet combustion using the flame jets 44 the same as the control using the jet combustion system 55 illustrated in Fig. 18 in the processing other than steps S26, S28, and S31.

A case where the engine control unit 52 performs spark ignition combustion using the spark combustion system 55A will be described. For example, when the engine 1A is used in a cryogenic environment (for example, below freezing), the jet intensity is extremely low. In this case, since the sub-chamber temperature is too low, the voltage fluctuation range of the primary voltage is at the position of misfire on the left side of the Level 1 illustrated in Fig. 17. That is, the voltage fluctuation range of the primary voltage when the engine control unit 52 performs the pre-air-warming determination in step S25 is deviated from that at the post-air-warming determination illustrated in Fig. 19 by a predetermined value or larger.

In this case, the engine control unit 52 rapidly increases the sub-chamber temperature, and unless the voltage fluctuation range and the voltage fluctuation rate of the primary voltage fall within the range of Level 1 illustrated in Fig. 17, the jet combustion system 55 cannot be stably used. Therefore, the engine control unit 52 inputs an ignition signal to the ignition device 50A, and causes the ignition plug 40A to combust the air-fuel mixture in the main chamber 37 by conventional ignition combustion. When the conventional ignition combustion is performed in the main chamber 37, the sub-chamber temperature rapidly increases, so that the time required for the warm-up operation can be shortened.

At this time, the engine control unit 52 inputs an ignition signal to the ignition device 50 and monitors the jet intensity of the flame jets 44 generated by the ignition plug 40. Then, at the time when the value (the value of the voltage fluctuation range) of the post-warm-up determination illustrated in the graph of Fig. 19 is reached at the time of the warm-up determination in step S25, the engine control unit 52 cuts off the ignition signal input to the ignition device 50A, and switches the control from the conventional ignition combustion to the jet combustion.

When it is determined that pre-ignition has occurred in steps S28 and S31, the engine control unit 52 performs forced cooling control or operating point control of the sub-chamber 42 by the method described with reference to Fig. 18. If the pre-ignition still is not suppressed under a condition within the control range, the engine control unit 52 cuts off the ignition signal input to the ignition device 50 and stops the jet combustion. Then, the engine control unit 52 inputs an ignition signal to the ignition device 50A and performs conventional ignition combustion. By such control, the sub-chamber temperature decreases, and pre-ignition can be suppressed.

In addition, in a case where the engine control unit 52 determines that the maximum pressure (Pmax) of the cylinder pressure is excessive in step S31, when the engine control unit 52 cannot control jet combustion within the stable combustion region 131 of Fig. 17 even if the ignition pulse retarding control or the high G/F control of the jet combustion is performed, the engine control unit 52 cuts off the ignition signal input to the ignition device 50 and stops the jet combustion. Then, the engine control unit 52 inputs an ignition signal to the ignition device 50A and performs conventional ignition combustion. By such control, the sub-chamber temperature decreases, and the maximum pressure (Pmax) of the cylinder pressure can be suppressed.

As described above, when the average value is included in a first region (Level 1) and the fluctuation rate of the average value is equal to or larger than a first threshold value (threshold value th1), or when the average value is smaller than the first region (Level 1), the internal combustion engine control unit (engine control unit 52) controls the internal combustion engine (engine 1) by selecting at least one of control of supplying a current to the first ignition device (ignition device 50), control of advancing the second ignition timing, and control of heating the sub-combustion chamber (sub-chamber 42) by a heating device (sub-chamber heater 46) installed in the sub-combustion chamber (sub-chamber 42).

Furthermore, when the average value is included in a second region (Level 2) larger than the first region (Level 1) and the fluctuation rate of the average value is smaller than the first threshold value (threshold value th1) and is equal to or larger than a second threshold value (threshold value th2) smaller than the first threshold value (threshold value th1), the internal combustion engine control unit (engine control unit 52) controls the internal combustion engine (engine 1) by selecting at least one of control of retarding the second ignition timing, control of cooling the sub-combustion chamber (sub-chamber 42) with a cooling medium, control of changing an operating point (rotation speed, torque) of the internal combustion engine (engine 1), and control of cutting off the secondary current supplied to the second ignition plug (ignition plug 40) by the second ignition device (ignition device 50) and supplying a current to the first ignition device (ignition device 50).

Furthermore, when the average value is included in a third region (Level 3) larger than the second region (Level 2) and the fluctuation rate of the average value is smaller than the second threshold value (threshold value th2) and is equal to or larger than a third threshold value (threshold value th3) smaller than the second threshold value (threshold value th2), or when the average value is larger than the third region (Level 3), the internal combustion engine control unit (engine control unit 52) performs at least one of control of retarding the second ignition timing, control of cooling the sub-combustion chamber (sub-chamber 42) with a cooling medium, control of changing an operating point (rotation speed, torque) of the internal combustion engine (engine 1), and control of cutting off the secondary current supplied to the second ignition plug (ignition plug 40) by the second ignition device (ignition device 50) and supplying a current to the first ignition device (ignition device 50). That is, the engine control unit 52 performs control for increasing thermal efficiency (high thermal efficiency control) (S29). The high thermal efficiency control is similar to the control described in step S9 of Fig. 17.

Also in the jet combustion system 55 and the spark combustion system 55A according to the second embodiment described above, the engine control circuit 24 estimates the jet intensity, performs level-classification of the estimated jet intensity, and controls the operation of each unit of the engine 1A with an appropriate control amount for each level. At this time, the engine control unit 52 can selectively use the jet combustion system 55 and the spark combustion system 55A. With such control, the engine 1A can be operated with high efficiency by maximally applying the jet combustion system 55 and the spark combustion system 55A while achieving highly robust combustion in a wide operating range and operating environment.

The engine 1A may have a configuration in which the jet combustion system 55 is provided on the top surface of the main chamber 37, and the spark combustion system 55A is provided on the side wall of the cylinder 14. Furthermore, the injector 13 may be provided in the cylinder 14. Furthermore, the injector 13 may be provided in the sub-chamber 42 of the jet combustion system 55.

Reference Signs List

| | |
|---|---|
| 1 | engine |
| 4 | electronically controlled throttle |
| 12 | accelerator opening sensor |
| 13 | injector |
| 14 | cylinder |
| 20 | ECU |
| 24 | engine control circuit |
| 35 | piston |
| 37 | main chamber |
| 38 | cylinder |
| 40 | ignition plug |
| 41 | electrode |
| 42 | sub-chamber |
| 45 | sub-chamber forming member |
| 50 | ignition device |
| 51 | jet intensity estimating unit |
| 52 | engine control unit |
| 55 | jet combustion system |

## Claims

**1.** An internal combustion engine control device that controls output of an internal combustion engine (1), the internal combustion engine (1) including:

a cylinder (14) in which an air-fuel mixture in which fuel injected by a fuel injection device (13) and air taken in from an intake system (31) are mixed is combusted in a main combustion chamber (37) facing a piston;
a sub-combustion chamber (42) that communicates with the main combustion chamber (37) and takes in the air-fuel mixture from the main combustion chamber (37);
an ignition plug (40) that is attached inside the sub-combustion chamber (42) and injects a flame jet generated by igniting the air-fuel mixture inside the sub-combustion chamber (42) into the main combustion chamber (37) to ignite the air-fuel mixture in the main combustion chamber; **characterized in that**
an ignition device (30) that includes a primary coil (63) and a secondary coil (64) and supplies a secondary current to the ignition plug (40) at a predetermined ignition timing,
**characterized in that** the internal combustion engine control device comprises:

a jet intensity estimating unit (51) that estimates an intensity of the flame jet based on at least one of a primary current applied to the primary coil (63) of the ignition device (50), a primary voltage applied to the primary coil (63), the secondary current applied to the secondary coil (64), and a secondary voltage applied to the secondary coil (64); and
an internal combustion engine control unit (20) that controls the internal combustion engine (1) based on a combustion state inside the sub-combustion chamber (42) determined based on the estimated intensity of the flame jet, wherein the jet intensity estimating unit (51) estimates that the intensity of the flame jet is larger as a change amount of the falling of the primary voltage after energization of the primary coil (63) is cut off is larger.

**2.** The internal combustion engine control device according to claim 1, wherein the internal combustion engine control unit (20) classifies an average value of the intensity of the flame jet into a predetermined region, determines a combustion state inside the sub-combustion chamber (42) based on the average value classified into each region and a fluctuation rate of the average value, and controls the internal combustion engine (1).

**3.** The internal combustion engine control device according to claim 2, wherein the internal combustion engine control unit (20) calculates the average value and the fluctuation rate of the average value in a set cycle of the falling of the primary voltage after the energization of the primary coil (63) is cut off, and controls the ignition timing, an opening of an exhaust gas recirculation valve (26), a throttle opening, or a fuel injection amount based on the average value and the fluctuation rate.

**4.** The internal combustion engine control device according to claim 3, wherein when the average value is included in a first region and the fluctuation rate of the average value is equal to or larger than a first threshold value, or when the average value is smaller than the first region, the internal combustion engine control unit (20) controls the internal combustion engine (1) by selecting at least one of control of advancing the ignition timing and control of heating the sub-combustion chamber (42) by a heating device (46) installed in the sub-combustion chamber (42).

**5.** The internal combustion engine control device according to claim 4, wherein when the average value is included in a second region larger than the first region and the fluctuation rate of the average value is smaller than the first threshold value and is equal to or larger than a second threshold value smaller than the first threshold value, the internal combustion engine control unit (20) controls the internal combustion engine (1) by selecting at least one of control of retarding the ignition timing, control of cooling the sub-combustion chamber (42) with a cooling medium, and control of changing an operating point of the internal combustion engine (1).

**6.** The internal combustion engine control device according to claim 5, wherein when the average value is included in a third region larger than the second region and the fluctuation rate of the average value is smaller than the second threshold value and is equal to or larger than a third threshold value smaller than the second threshold value, or when the average value is larger than the third region, the internal combustion engine control unit (20) performs at least one of control of retarding the ignition timing, control of cooling the sub-combustion chamber (42) with a cooling medium, and control of changing an operating point of the internal combustion engine (1).

**7.** The internal combustion engine control device according to claim 6, wherein when the average value is included in the first region and the fluctuation rate is equal to or smaller than the first threshold value, when the average value is included in the second region and the fluctuation rate is equal to or smaller than the second threshold value, or when the average value is included in the third region and the fluctuation rate is equal to or smaller than the third threshold value, the internal combustion engine control unit (20) controls the internal combustion engine (1) by selecting at least one of control of increasing the opening of the exhaust gas recirculation valve (26), control of increasing the throttle opening, and control of increasing the fuel injection amount.

**8.** The internal combustion engine control device according to claim 1, further including:

a first ignition plug (40A) that is attached inside the main combustion chamber (37) and ignites the air-fuel mixture in the main combustion chamber (37);
a first ignition device (50A) that supplies a current to the first ignition plug (40A) at a first ignition timing;
a second ignition plug (40) that is the ignition plug (40) attached inside the sub-combustion chamber (42); and
a second ignition device (50) that is the ignition device that includes the primary coil (63) and the secondary coil (64) and supplies a secondary current to the second ignition plug at a second ignition timing,
wherein the jet intensity estimating unit (51) estimates the intensity of the flame jet based on at least one of a primary current applied to the primary coil (63) of the second ignition device (50), a primary voltage applied to the primary coil (64), the secondary current applied to the secondary coil (64), and a secondary voltage applied to the secondary coil (64).

**9.** The internal combustion engine control device according to claim 8, wherein the internal combustion engine control unit (20) classifies an average value of the intensity of the flame jet into a predetermined region, and determines a combustion state inside the sub-combustion chamber (42) based on the average value classified into each region and a fluctuation rate of the average value.

**10.** The internal combustion engine control device according to claim 9, wherein the internal combustion engine control unit (20) calculates the average value and the fluctuation rate of the average value in a set cycle of the falling of the primary voltage after the energization of the primary coil (63) is cut off, and controls the second ignition timing, an opening of an exhaust gas recirculation valve (26), a throttle opening, or a fuel injection amount based on the average value and the fluctuation rate.

**11.** The internal combustion engine control device according to claim 10, wherein when the average value is included in a first region and the fluctuation rate of the average value is equal to or larger than a first threshold value, or when the average value is smaller than the first region, the internal combustion engine control unit (20) controls the internal combustion engine (1) by selecting at least one of control of supplying a current to the first ignition device (50A), control of advancing the second ignition timing, and control of heating the sub-combustion chamber (42) by a heating device installed in the sub-combustion chamber (42).

**12.** The internal combustion engine control device according to claim 11, wherein when the average value is included in a second region larger than the first region and the fluctuation rate of the average value is smaller than the first threshold value and is equal to or larger than a second threshold value smaller than the first threshold value, the internal combustion engine control unit (20) controls the internal combustion engine (1) by selecting at least one of control of retarding the second ignition timing, control of cooling the sub-combustion chamber (42) with a cooling medium, control of changing an operating point of the internal combustion engine (1), and control of cutting off the secondary current supplied to the second ignition plug (40) by the second ignition device (50) and supplying a current to the first ignition device (50A).

**13.** The internal combustion engine control device according to claim 12, wherein when the average value is included in a third region larger than the second region and the fluctuation rate of the average value is smaller than the second threshold value and is equal to or larger than a third threshold value smaller than the second threshold value, or when the average value is larger than the third region, the internal combustion engine control unit (20) performs at least one of control of retarding the second ignition timing, control of cooling the sub-combustion chamber (42) with a cooling medium, control of changing an operating point of the internal combustion engine (1), and control of cutting off the secondary current supplied to the second ignition plug (40) by the second ignition device (50) and supplying a current to the first ignition device (50A).

**14.** The internal combustion engine control device according to claim 13, wherein when the average value is included in the first region and the fluctuation rate is equal to or smaller than the first threshold value, when the average value is included in the second region and the fluctuation rate is equal to or smaller than the second threshold value, or when the average value is included in the third region and the fluctuation rate is equal to or smaller than the third threshold value, the internal combustion engine control unit (20) controls the internal combustion engine (1) by selecting at least one of control of increasing the opening of the exhaust gas recirculation valve (26), control of increasing the throttle opening, and control of increasing the fuel injection amount.

## Patentansprüche

**1.** Brennkraftmaschinen-Steuervorrichtung, die die Ausgabe einer Brennkraftmaschine (1) steuert, wobei die Brennkraftmaschine (1) enthält:

einen Zylinder (14), in dem ein Luft-Kraftstoff-Gemisch, in dem durch eine Kraftstoffeinspritzvorrichtung (13) eingespritzter Kraftstoff und von einem Einlasssystem (31) aufgenommene Luft gemischt werden, in einer Hauptverbrennungskammer (37), die einem Kolben gegenüberliegt, verbrannt wird;
eine Nebenverbrennungskammer (42), die mit der Hauptverbrennungskammer (37) in Verbindung steht und das Luft-Kraftstoff-Gemisch von der Hauptverbrennungskammer (37) aufnimmt;
eine Zündkerze (40), die in der Nebenverbrennungskammer (42) angebracht ist und einen durch Zünden des Luft-Kraftstoff-Gemischs in der Nebenverbrennungskammer (42) erzeugten Flammenstrahl in die Hauptverbrennungskammer (37) injiziert, um das Luft-Kraftstoff-Gemisch in der Hauptverbrennungskammer zu zünden; **gekennzeichnet durch**
eine Zündvorrichtung (30), die eine Primärspule (63) und eine Sekundärspule (64) enthält und der Zündkerze (40) zu einem vorgegebenen Zündzeitpunkt einen Sekundärstrom zuführt,
**dadurch gekennzeichnet, dass** die Brennkraftmaschinen-Steuervorrichtung umfasst:

eine Strahlstärke-Schätzeinheit (51), die auf der Grundlage wenigstens eines eines an die Primärspule (63) der Zündvorrichtung (50) angelegten Primärstroms, einer an die Primärspule (63) angelegten Primärspannung, des an die Sekundärspule (64) angelegten Sekundärstroms und einer an die Sekundärspule (64) angelegten Sekundärspannung eine Stärke des Flammenstrahls schätzt; und
eine Brennkraftmaschinen-Steuereinheit (20), die die Brennkraftmaschine (1) auf der Grundlage eines auf der Grundlage der geschätzten Stärke des Flammenstrahls bestimmten Verbrennungszustands in der Nebenverbrennungskammer (42) steuert, wobei die Strahlstärke-Schätzeinheit (51) schätzt, dass die Stärke des Flammenstahls größer ist, während ein Änderungsbetrag des Fallens der Primärspannung, nachdem die Speisung der Primärspule (63) abgeschaltet worden ist, größer ist.

**2.** Brennkraftmaschinen-Steuervorrichtung nach Anspruch 1, wobei die Brennkraftmaschinen-Steuereinheit (20) einen Durchschnittswert der Stärke des Flammenstrahls in ein vorgegebenes Gebiet klassifiziert, einen Verbrennungszustand in der Nebenverbrennungskammer (42) auf der Grundlage des in jedes Gebiet klassifizierten Durchschnittswerts und einer Fluktuationsrate des Durchschnittswerts bestimmt und die Brennkraftmaschine (1) steuert.

**3.** Brennkraftmaschinen-Steuervorrichtung nach Anspruch 2, wobei die Brennkraftmaschinen-Steuereinheit (20) den Durchschnittswert und die Fluktuationsrate des Durchschnittswerts in einem eingestellten Zyklus des Fallens der Primärspannung, nachdem die Speisung der Primärspule (63) abgeschaltet worden ist, berechnet und den Zündzeitpunkt, eine Öffnung des Abgasrückführungsventils (26), eine Drosselklappenöffnung oder eine Kraftstoffeinspritzmenge auf der Grundlage des Durchschnittswerts und der Fluktuationsrate steuert.

**4.** Brennkraftmaschinen-Steuervorrichtung nach Anspruch 3, wobei, wenn der Durchschnittswert in einem ersten Gebiet enthalten ist und die Fluktuationsrate des Durchschnittswerts gleich einem oder größer als ein erster Schwellenwert ist oder wenn der Durchschnittswert kleiner als das erste Gebiet ist, die Brennkraftmaschinen-Steuereinheit (20) die Brennkraftmaschine (1) durch Auswählen wenigstens eines des Steuerns des Verstellens des Zündzeitpunkts nach früh und des Steuerns des Erwärmens der Nebenverbrennungskammer (42) durch eine in der Nebenverbrennungskammer (42) eingebaute Heizvorrichtung (46) steuert.

**5.** Brennkraftmaschinen-Steuervorrichtung nach Anspruch 4, wobei, wenn der Durchschnittswert in einem zweiten Gebiet, das größer als das erste Gebiet ist, enthalten ist und die Fluktuationsrate des Durchschnittswerts kleiner als der erste Schwellenwert ist und gleich einem oder kleiner als ein zweiter Schwellenwert, der kleiner als der erste Schwellenwert ist, ist, die Brennkraftmaschinen-Steuereinheit (20) die Brennkraftmaschine (1) durch Auswählen wenigstens eines des Steuerns des Verstellens des Zündzeitpunkts nach spät, des Steuerns des Kühlens der Nebenverbrennungskammer (42) mit einem Kühlmittel und des Steuerns des Änderns des Arbeitspunkts der Brennkraftmaschine (1) steuert.

**6.** Brennkraftmaschinen-Steuervorrichtung nach Anspruch 5, wobei, wenn der Durchschnittswert in einem dritten Gebiet, das größer als das zweite Gebiet ist, enthalten ist und die Fluktuationsrate des Durchschnittswerts kleiner als der zweite Schwellenwert ist und gleich einem oder größer als ein dritter Schwellenwert, der kleiner als der zweite Schwellenwert ist, ist oder wenn der Durchschnittswert größer als das dritte Gebiet ist, die Brennkraftmaschinen-Steuereinheit (20) wenigstens eines des Steuerns des Verstellens des Zündzeitpunkts nach spät, des Steuerns des Kühlens der Nebenverbrennungskammer (42) mit einem Kühlmittel und des Steuerns des Änderns des Arbeitspunkts der Brennkraftmaschine (1) ausführt.

**7.** Brennkraftmaschinen-Steuervorrichtung nach Anspruch 6, wobei, wenn der Durchschnittswert in dem ersten Gebiet enthalten ist und die Fluktuationsrate gleich dem oder kleiner als der erste Schwellenwert ist, wenn der Durchschnittswert in dem zweiten Gebiet enthalten ist und die Fluktuationsrate gleich dem oder kleiner als der zweite Schwellenwert ist oder wenn der Durchschnittswert in dem dritten Gebiet enthalten ist und die Fluktuationsrate gleich dem oder kleiner als der dritte Schwellenwert ist, die Brennkraftmaschinen-Steuereinheit (20) die Brennkraftmaschine (1) durch Auswählen wenigstens eines des Steuerns des Erhöhens der Öffnung des Abgasrückführungsventils (26), des Steuerns des Erhöhens der Drosselklappenöffnung und des Steuerns des Erhöhens der Kraftstoffeinspritzmenge steuert.

**8.** Brennkraftmaschinen-Steuervorrichtung nach Anspruch 1, die ferner enthält:

eine erste Zündkerze (40A), die in der Hauptverbrennungskammer (37) angebracht ist und das Luft-Kraftstoff-Gemisch in der Hauptverbrennungskammer (37) zündet;
eine erste Zündvorrichtung (50 A), die der ersten Zündkerze (40A) zu einem ersten Zündzeitpunkt einen Strom zuführt;
eine zweite Zündkerze (40), die die in der Nebenverbrennungskammer (42) angebrachte Zündkerze (40) ist; und
eine zweite Zündvorrichtung (50), die die Zündvorrichtung ist, die die Primärspule (63) und die Sekundärspule (64) enthält und der zweiten Zündkerze zu einem zweiten Zündzeitpunkt einen Sekundärstrom zuführt,
wobei die Strahlstärke-Schätzeinheit (51) die Stärke des Flammenstrahls auf der Grundlage wenigstens eines eines an die Primärspule (63) der zweiten Zündvorrichtung (50) angelegten Primärstroms, einer an die Primärspule (64) angelegten Primärspannung, des an die Sekundärspule (64) angelegten Sekundärstroms und einer an die Sekundärspule (64) angelegten Sekundärspannung schätzt.

**9.** Brennkraftmaschinen-Steuervorrichtung nach Anspruch 8, wobei die Brennkraftmaschinen-Steuereinheit (20) einen Durchschnittswert der Stärke des Flammenstrahls in ein vorgegebenes Gebiet klassifiziert und einen Verbrennungszustand in der Nebenverbrennungskammer (42) auf der Grundlage des in jedes Gebiet klassifizierten Durchschnittswerts und einer Fluktuationsrate des Durchschnittswerts bestimmt.

**10.** Brennkraftmaschinen-Steuervorrichtung nach Anspruch 9, wobei die Brennkraftmaschinen-Steuereinheit (20) den Durchschnittswert und die Fluktuationsrate des Durchschnittswerts in einem eingestellten Zyklus des Fallens der Primärspannung, nachdem die Speisung der Primärspule (63) abgeschaltet worden ist, berechnet und den zweiten Zündzeitpunkt, ein Öffnen eines Abgasrückführungsventils (26), eine Drosselklappenöffnung oder eine Kraftstoffeinspritzmenge auf der Grundlage des Durchschnittswerts und der Fluktuationsrate steuert.

**11.** Brennkraftmaschinen-Steuervorrichtung nach Anspruch 10, wobei, wenn der Durchschnittswert in einem ersten Gebiet enthalten ist und die Fluktuationsrate des Durchschnittswerts gleich einem oder größer als ein erster Schwellenwert ist oder wenn der Durchschnittswert kleiner als das erste Gebiet ist, die Brennkraftmaschinen-Steuereinheit (20) die Brennkraftmaschine (1) durch Auswählen wenigstens eines des Steuerns des Zuführen eines Stroms zu der ersten Zündvorrichtung (50A), des Steuerns des Verstellens des zweiten Zündzeitpunkts nach früh und des Steuerns des Erwärmens der Nebenverbrennungskammer (42) durch eine in die Nebenverbrennungskammer (42) eingebaute Heizvorrichtung steuert.

**12.** Brennkraftmaschinen-Steuervorrichtung nach Anspruch 11, wobei, wenn der Durchschnittswert in einem zweiten Gebiet, das größer als das Gebiet ist, enthalten ist und die Fluktuationsrate des Durchschnittswerts kleiner als der erste Schwellenwert ist und gleich einem oder größer als ein zweiter Schwellenwert, der kleiner als der erste Schwellenwert ist, ist, die Brennkraftmaschinen-Steuereinheit (20) die Brennkraftmaschine (1) durch Auswählen wenigstens eines des Steuerns des Verstellens des zweiten Zündzeitpunkts nach spät, des Steuerns des Kühlens der Nebenverbrennungskammer (42) mit einem Kühlmittel, des Steuerns des Änderns eines Arbeitspunkts der Brennkraftmaschine (1) und des Steuerns des Abschaltens des der zweiten Zündkerze (40) durch die zweite Zündvorrichtung (50) zugeführten Sekundärstroms und des Zuführens eines Stroms zu der erste Zündvorrichtung (50A) steuert.

**13.** Brennkraftmaschinen-Steuervorrichtung nach Anspruch 12, wobei, wenn der Durchschnittswert in einem dritten Gebiet, das größer als das zweite Gebiet ist, enthalten ist und die Fluktuationsrate des Durchschnittswerts kleiner als der zweite Schwellenwert ist und gleich einem oder größer als ein dritter Schwellenwert, der kleiner als der zweite Schwellenwert ist, ist oder wenn der Durchschnittswert größer als das dritte Gebiet ist, die Brennkraftmaschinen-Steuereinheit (20) wenigstens eines des Steuerns des Verstellens des zweiten Zündzeitpunkts nach spät, des Steuerns des Kühlens der Nebenverbrennungskammer (42) mit einem Kühlmittel, der Steuerns des Änderns eines Arbeitspunkts der Brennkraftmaschine (1) und des Steuerns des Abschaltens des durch die zweite Zündvorrichtung (50) der zweiten Zündkerze (40) zugeführten Sekundärstroms und des Zuführens eines Stroms zu der ersten Zündvorrichtung (50A) ausführt.

**14.** Brennkraftmaschine-Steuervorrichtung nach Anspruch 13, wobei, wenn der Durchschnittswert in dem ersten Gebiet enthalten ist und die Fluktuationsrate gleich dem oder kleiner als der erste Schwellenwert ist, wenn der Durchschnittswert in dem zweiten Gebiet enthalten ist und die Fluktuationsrate gleich dem oder kleiner als der zweite Schwellenwert ist oder wenn der Durchschnittswert in dem dritten Gebiet enthalten ist und die Fluktuationsrate gleich dem oder kleiner als der dritte Schwellenwert ist, die Brennkraftmaschinen-Steuereinheit (20) die Brennkraftmaschine (1) durch Auswählen wenigstens eines der Steuerns des Erhöhens der Öffnung des Abgasrückführungsventils (26), des Steuerns des Erhöhens der Drosselklappenöffnung und des Steuerns des Erhöhens der Kraftstoffeinspritzmenge steuert.

## Revendications

**1.** Dispositif de commande de moteur à combustion interne qui commande une sortie d'un moteur à combustion interne (1), le moteur à combustion interne (1) incluant :

un cylindre (14) dans lequel un mélange air/carburant, dans lequel sont mélangés un carburant injecté par un dispositif d'injection de carburant (13) et de l'air admis depuis un système d'admission (31), est brûlé dans une chambre de combustion principale (37) faisant face à un piston ;

une chambre de combustion auxiliaire (42) qui communique avec la chambre de combustion principale (37) et qui admet le mélange air/carburant provenant de la chambre de combustion principale (37) ;

une bougie d'allumage (40) qui est fixée à l'intérieur de la chambre de combustion auxiliaire (42) et qui injecte une projection de flamme générée en enflammant le mélange air/carburant à l'intérieur de la chambre de combustion auxiliaire (42) jusque dans la chambre de combustion principale (37) pour enflammer le mélange air/carburant dans la chambre de combustion principale ;

**caractérisé par**

un dispositif d'allumage (30) qui inclut une bobine primaire (63) et une bobine secondaire (64) et qui alimente un courant secondaire à la bougie d'allumage (40) à une temporisation d'allumage prédéterminée,

**caractérisé en ce que** le dispositif de commande de moteur à combustion interne comprend :

une unité d'estimation d'intensité de projection (51) qui estime une intensité de la projection de flamme sur la base d'au moins un élément parmi un courant primaire appliqué sur la bobine primaire (63) du dispositif d'allumage (50), une tension primaire appliquée sur la bobine primaire (63), le courant secondaire appliqué sur la bobine secondaire (64), et une tension secondaire appliquée sur la bobine secondaire (64) ; et

une unité de commande de moteur à combustion interne (20) qui commande le moteur à combustion interne (1) sur la base d'un état de combustion à l'intérieur de la chambre de combustion auxiliaire (42) déterminé sur la base de l'intensité estimée de la projection de flamme, dans lequel l'unité d'estimation d'intensité de projection (51) estime que l'intensité de la projection de flamme est supérieure lorsqu'un changement quantitatif de la chute de la tension primaire, après coupure de l'excitation de la bobine primaire (63), est supérieur.

2. Dispositif de commande de moteur à combustion interne selon la revendication 1, dans lequel l'unité de commande de moteur à combustion interne (20) classifie une valeur moyenne de l'intensité de la projection de flamme dans une région prédéterminée, détermine un état de combustion à l'intérieur de la chambre de combustion auxiliaire (42) sur la base de la valeur moyenne classifiée dans chaque région et d'un taux de fluctuation de la valeur moyenne, et commande le moteur à combustion interne (1).

3. Dispositif de commande de moteur à combustion interne selon la revendication 2, dans lequel l'unité de commande de moteur à combustion interne (20) calcule la valeur moyenne et le taux de fluctuation de la valeur moyenne dans un cycle défini de la chute de la tension primaire après coupure de l'excitation de la bobine primaire (63), et commande la temporisation d'allumage, une ouverture d'une soupape de recirculation de gaz d'échappement (26), une ouverture d'étranglement, ou une quantité d'injection de carburant sur la base de la valeur moyenne et du taux de fluctuation.

4. Dispositif de commande de moteur à combustion interne selon la revendication 3, dans lequel, quand la valeur moyenne est incluse dans une première région et que le taux de fluctuation de la valeur moyenne est égal ou supérieur à une première valeur seuil, ou quand la valeur moyenne est inférieure à la première région, l'unité de commande de moteur à combustion interne (20) commande le moteur à combustion interne (1) en sélectionnant l'une au moins d'une commande d'avance de la temporisation d'allumage et d'une commande de chauffe de la chambre de combustion auxiliaire (42) par un dispositif de chauffe (46) installé dans la chambre de combustion auxiliaire (42).

5. Dispositif de commande de moteur à combustion interne selon la revendication 4, dans lequel, quand la valeur moyenne est incluse dans une deuxième région supérieure à la première région et que le taux de fluctuation de la valeur moyenne est inférieur à la première valeur seuil et est égal ou supérieur à une deuxième valeur seuil inférieure à la première valeur seuil, l'unité de commande de moteur à combustion interne (20) commande le moteur à combustion interne (1) en sélectionnant l'une au moins d'une commande de retard de la temporisation d'allumage, une commande de refroidissement de la chambre de combustion auxiliaire (42) avec un fluide de refroidissement, une commande de changement d'un point de fonctionnement du moteur à combustion interne (1).

6. Dispositif de commande de moteur à combustion interne selon la revendication 5, dans lequel, quand la valeur moyenne est incluse dans une troisième région supérieure à la deuxième région et que le taux de fluctuation de la valeur moyenne est inférieur à la deuxième valeur seuil et est égale ou supérieure à une troisième valeur seuil inférieure à la deuxième valeur seuil, ou quand la valeur moyenne est supérieure à la troisième région, l'unité de commande de moteur à combustion interne (20) effectue l'une au moins d'une commande de retard de la temporisation d'allumage, d'une commande de refroidissement de la chambre de combustion auxiliaire (42) avec un fluide de refroidissement, et d'une commande de changement d'un point de fonctionnement du moteur à combustion interne (1).

7. Dispositif de commande de moteur à combustion interne selon la revendication 6, dans lequel, quand la valeur moyenne est incluse dans la première région et que le taux de fluctuation est égal ou inférieur à la première valeur seuil, quand la valeur moyenne est incluse dans la deuxième région et que le taux de fluctuation est égal ou inférieur à la deuxième valeur seuil, ou quand la valeur moyenne est incluse dans la troisième région et que le taux de fluctuation est égal ou inférieur à la troisième valeur seuil, l'unité de commande de moteur à combustion interne (20) commande le moteur à combustion interne (1) en sélectionnant l'une au moins d'une commande d'augmentation de l'ouverture de la soupape de recirculation de gaz d'échappement (26), d'une commande d'augmentation de l'ouverture d'étranglement, et d'une commande d'augmentation de la quantité d'injection de carburant.

**8.** Dispositif de commande de moteur à combustion interne selon la revendication 1, incluant en outre :

une première bougie d'allumage (40A) qui est fixée à l'intérieur de la chambre de combustion principale (37) et qui enflamme le mélange air-carburant dans la chambre de combustion principale (37) ;
un premier dispositif d'allumage (50A) qui alimente un courant à la première bougie d'allumage (40A) à une première temporisation d'allumage ;
une seconde bougie d'allumage (40) qui est la bougie d'allumage (40) fixée à l'intérieur de la chambre de combustion auxiliaire (42) ; et
un second dispositif d'allumage (50) qui est le dispositif d'allumage qui inclut la bobine primaire (63) et la bobine secondaire (64) et qui alimente un courant secondaire à la seconde bougie d'allumage à une seconde temporisation d'allumage,
dans lequel l'unité d'estimation d'intensité de projection (51) estime l'intensité de la projection de flamme sur la base d'au moins un élément parmi un courant primaire appliqué sur la bobine primaire (63) du second dispositif d'allumage (50), une tension primaire appliquée sur la bobine primaire (64), le courant secondaire appliqué sur la bobine secondaire (64), et une tension secondaire appliquée sur la bobine secondaire (64).

**9.** Dispositif de commande de moteur à combustion interne selon la revendication 8, dans lequel l'unité de commande de moteur à combustion interne (20) classifie une valeur moyenne de l'intensité de la projection de flamme dans une région prédéterminée, et détermine un état de combustion à l'intérieur de la chambre de combustion auxiliaire (42) sur la base de la valeur moyenne classifiée dans chaque région et d'un taux de fluctuation de la valeur moyenne.

**10.** Dispositif de commande de moteur à combustion interne selon la revendication 9, dans lequel l'unité de commande de moteur à combustion interne (20) calcule la valeur moyenne et le taux de fluctuation de la valeur moyenne dans un cycle défini de la chute de la tension primaire après coupure de l'excitation de la bobine primaire (63), et commande la seconde temporisation d'allumage, une ouverture d'une soupape de recirculation de gaz d'échappement (26), une ouverture d'étranglement, ou une quantité d'injection de carburant sur la base de la valeur moyenne et du taux de fluctuation.

**11.** Dispositif de commande de moteur à combustion interne selon la revendication 10, dans lequel, quand la valeur moyenne est incluse dans une première région et que le taux de fluctuation de la valeur moyenne est égal ou supérieur à une première valeur seuil, ou quand la valeur moyenne est inférieure à la première région, l'unité de commande de moteur à combustion interne (20) commande le moteur à combustion interne (1) en sélectionnant l'une au moins d'une commande d'alimentation d'un courant au premier dispositif d'allumage (50A), d'une commande d'avance de la seconde temporisation d'allumage, et d'une commande de chauffe de la chambre de combustion auxiliaire (42) par un dispositif de chauffe installé dans la chambre de combustion auxiliaire (42).

**12.** Dispositif de commande de moteur à combustion interne selon la revendication 11, dans lequel, quand la valeur moyenne est incluse dans une deuxième région supérieure à la première région et que le taux de fluctuation de la valeur moyenne est inférieur à la première valeur seuil et est égal ou supérieur à une deuxième valeur seuil inférieure à la première valeur seuil, l'unité de commande de moteur à combustion interne (20) commande le moteur à combustion interne (1) en sélection l'une au moins d'une commande de retard de la seconde temporisation d'allumage, d'une commande de refroidissement de la chambre de combustion auxiliaire (42) avec un fluide de refroidissement, d'une commande de changement d'un point de fonctionnement du moteur à combustion interne (1), et d'une commande de coupure du courant secondaire alimenté à la seconde bougie d'allumage (40) par le second dispositif d'allumage (50) et d'alimentation d'un courant au premier dispositif d'allumage (50A).

**13.** Dispositif de commande de moteur à combustion interne selon la revendication 12, dans lequel, quand la valeur moyenne est incluse dans une troisième région supérieure à la deuxième région et que le taux de fluctuation de la valeur moyenne est inférieur à la deuxième valeur seuil et est égal ou supérieur à une troisième valeur seuil inférieure à la deuxième valeur seuil, ou quand la valeur moyenne est supérieure à la troisième région, l'unité de commande de moteur à combustion interne (20) effectue l'une au moins d'une commande de retard de la seconde temporisation d'allumage, d'une commande de refroidissement de la chambre de combustion auxiliaire (42) avec un fluide de refroidissement, d'une commande de changement d'un point de fonctionnement du moteur à combustion interne (1), et d'une commande de coupure du courant secondaire alimenté à la seconde bougie d'allumage (40) par le second dispositif d'allumage (50) et d'alimentation d'un courant au premier dispositif d'allumage (50A).

**14.** Dispositif de commande de moteur à combustion interne selon la revendication 13, dans lequel, quand la valeur moyenne est incluse dans la première région et que le taux de fonctionnement est égal ou inférieur à la première valeur seuil, quand la valeur moyenne est incluse dans la deuxième région et que le taux de fluctuation est égal ou inférieur à la deuxième valeur seuil, ou quand la valeur moyenne est incluse dans la troisième région et que le taux de fluctuation est égal ou inférieur à la troisième valeur seuil, l'unité de commande de moteur à combustion interne (20) commande le moteur à combustion interne (1) en sélectionnant l'une au moins d'une commande d'augmentation de l'ouverture de la soupape de recirculation de gaz d'échappement (26), d'une commande d'augmentation de l'ouverture d'étranglement, et d'une commande d'augmentation de la quantité d'injection de carburant.

*FIG. 1*

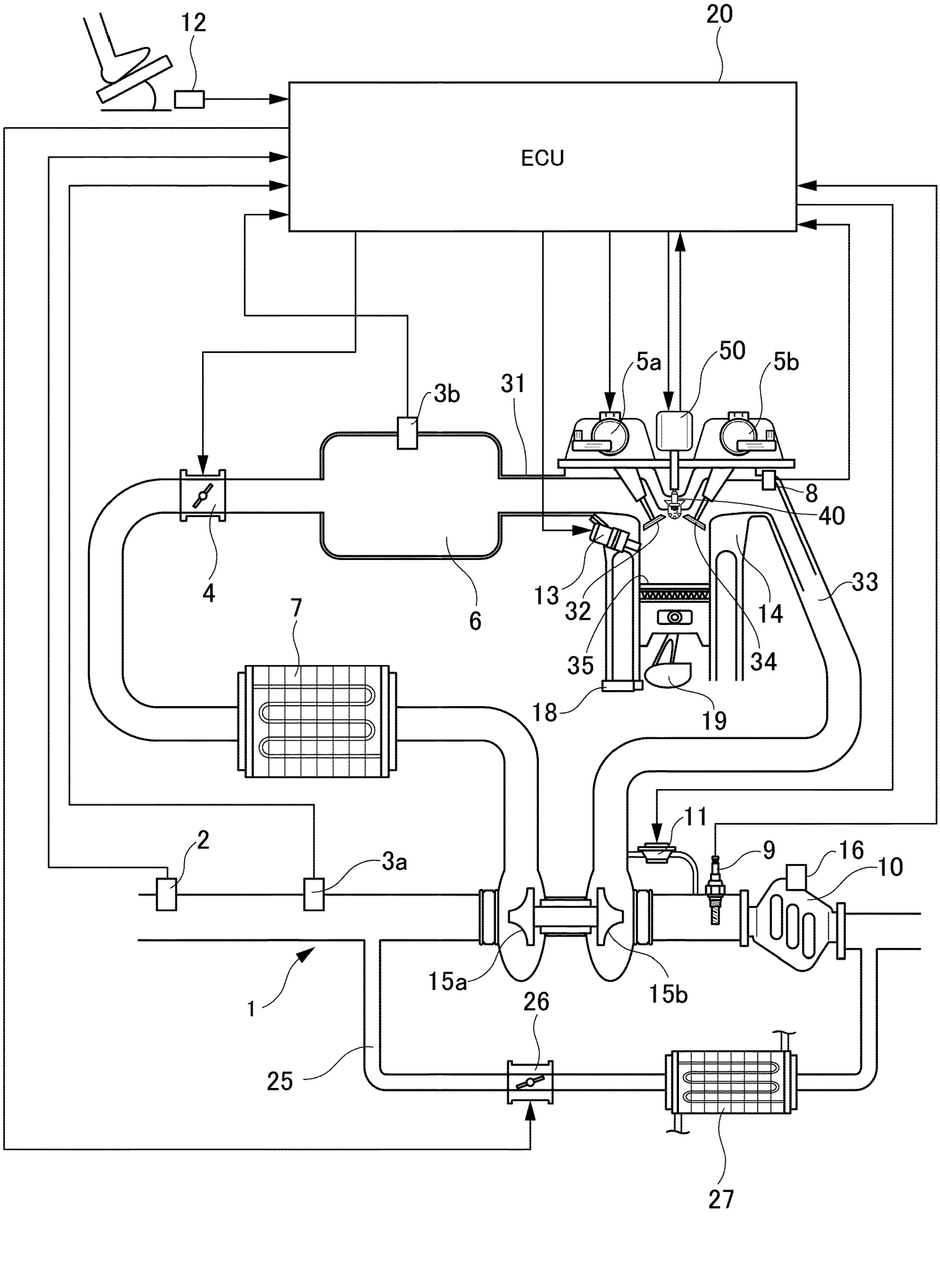

12
20
ECU
3b
31
5a
50
5b
8
40
4
6
13
32
14
33
7
35
34
18
19
11
2
3a
9
16
10
15a
15b
1
26
25
27

*FIG. 2*

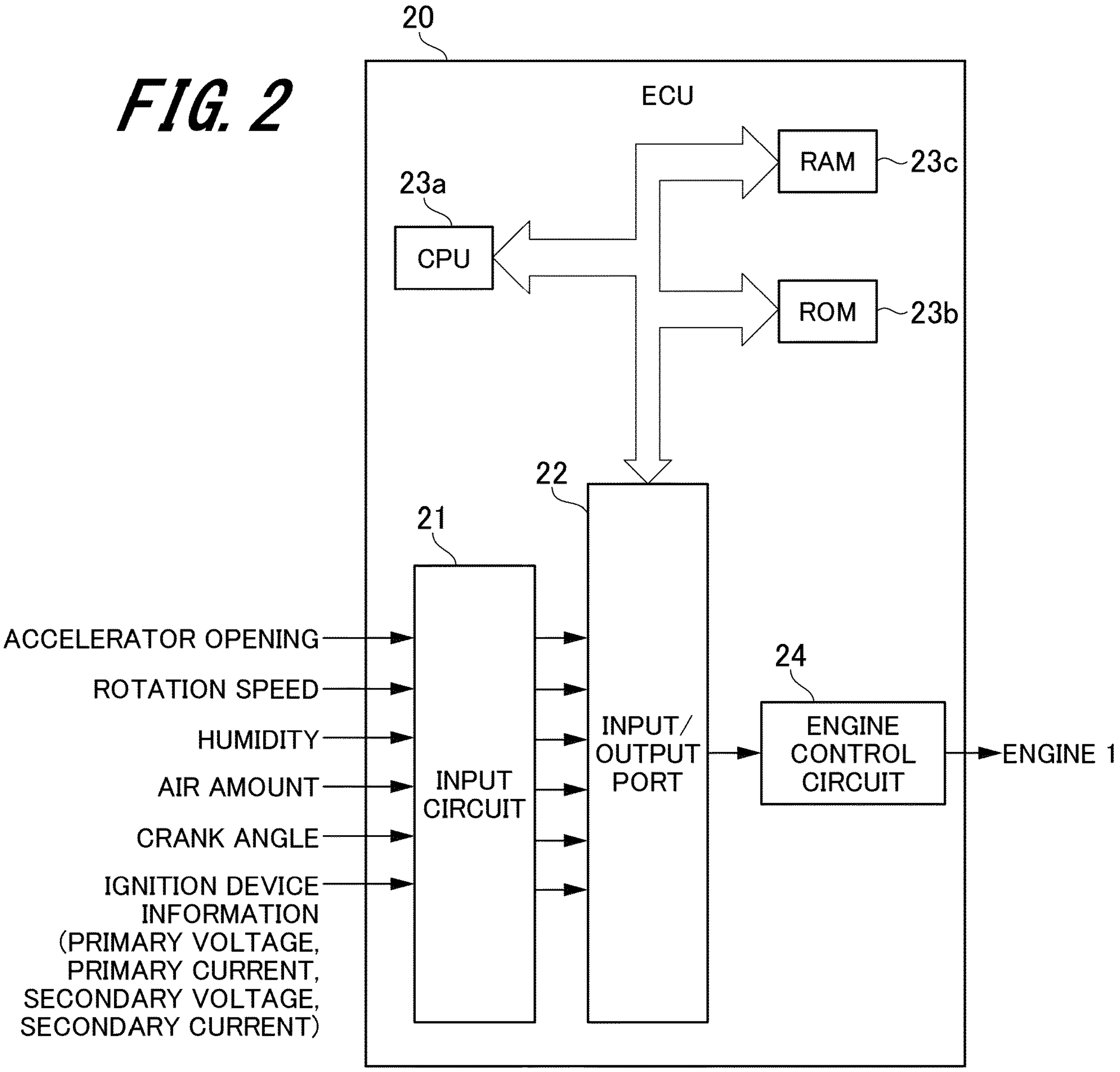
20
ECU
RAM
23c
23a
CPU
ROM
23b
22
21
ACCELERATOR OPENING
ROTATION SPEED
HUMIDITY
AIR AMOUNT
CRANK ANGLE
IGNITION DEVICE INFORMATION (PRIMARY VOLTAGE, PRIMARY CURRENT, SECONDARY VOLTAGE, SECONDARY CURRENT)
INPUT CIRCUIT
INPUT/ OUTPUT PORT
24
ENGINE CONTROL CIRCUIT
ENGINE 1

FIG. 3

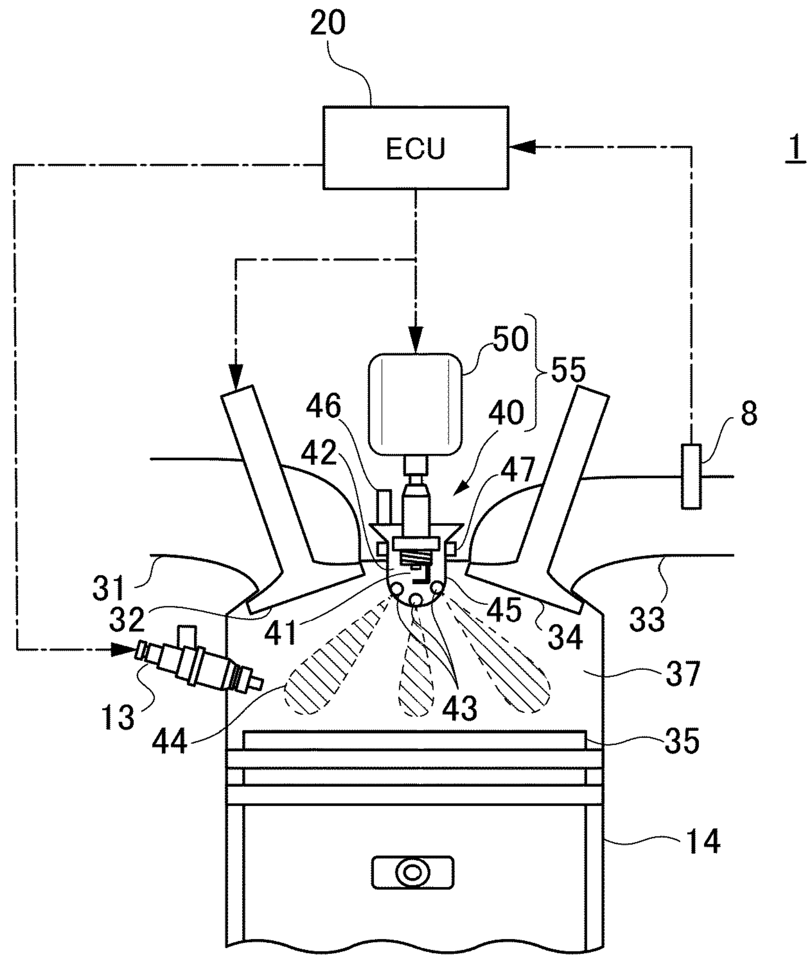
20
ECU
1
50
55
46
40
8
42
47
31
45
32
41
34
33
37
13
43
44
35
14

FIG. 4

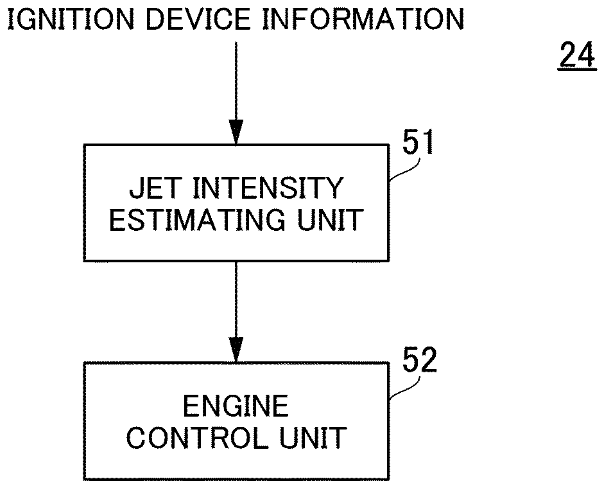
IGNITION DEVICE INFORMATION
24
51
JET INTENSITY ESTIMATING UNIT
52
ENGINE CONTROL UNIT

FIG. 5

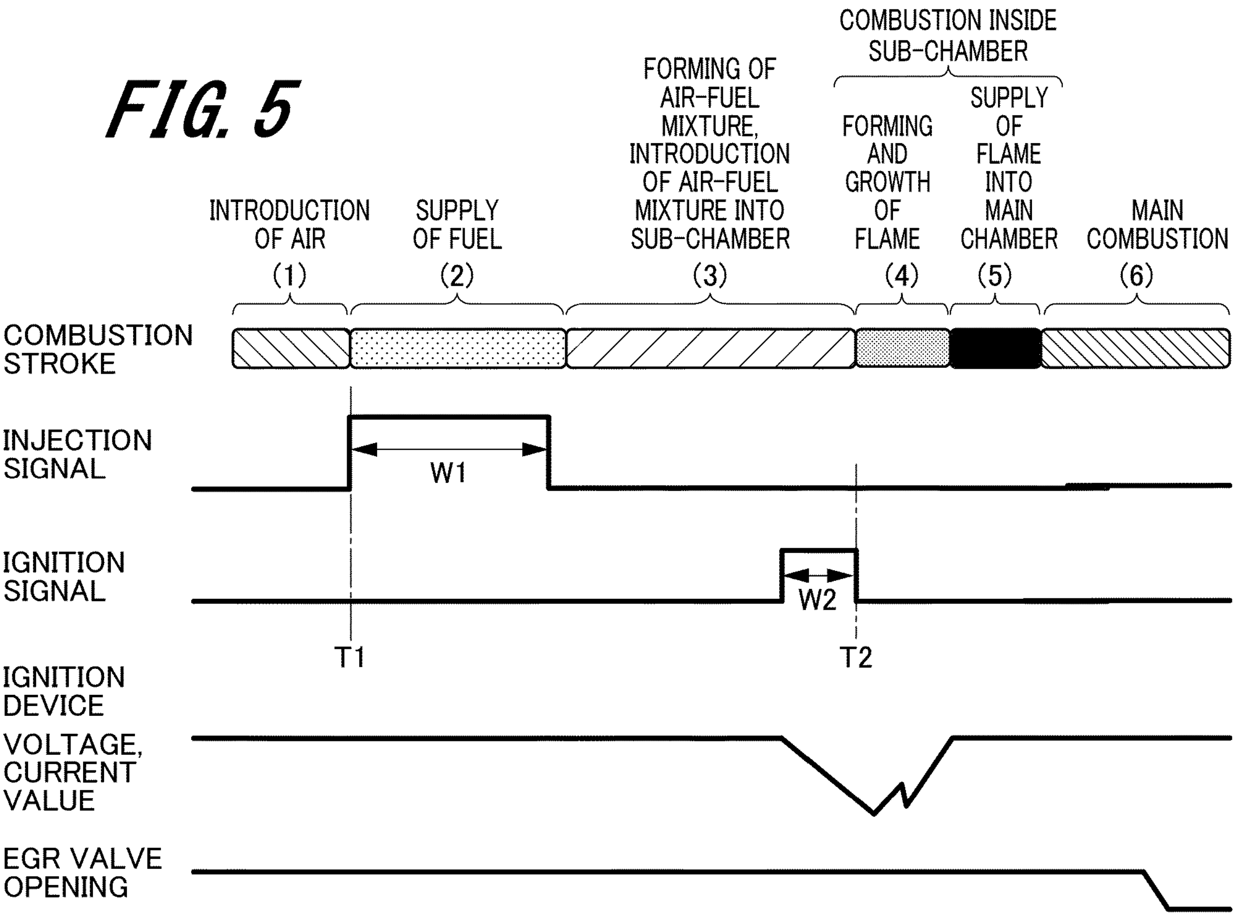
COMBUSTION INSIDE SUB-CHAMBER
INTRODUCTION OF AIR (1)
SUPPLY OF FUEL (2)
FORMING OF AIR-FUEL MIXTURE, INTRODUCTION OF AIR-FUEL MIXTURE INTO SUB-CHAMBER (3)
FORMING AND GROWTH OF FLAME (4)
SUPPLY OF FLAME INTO MAIN CHAMBER (5)
MAIN COMBUSTION (6)
COMBUSTION STROKE
INJECTION SIGNAL
W1
IGNITION SIGNAL
W2
T1
T2
IGNITION DEVICE VOLTAGE, CURRENT VALUE
EGR VALVE OPENING

FIG. 6

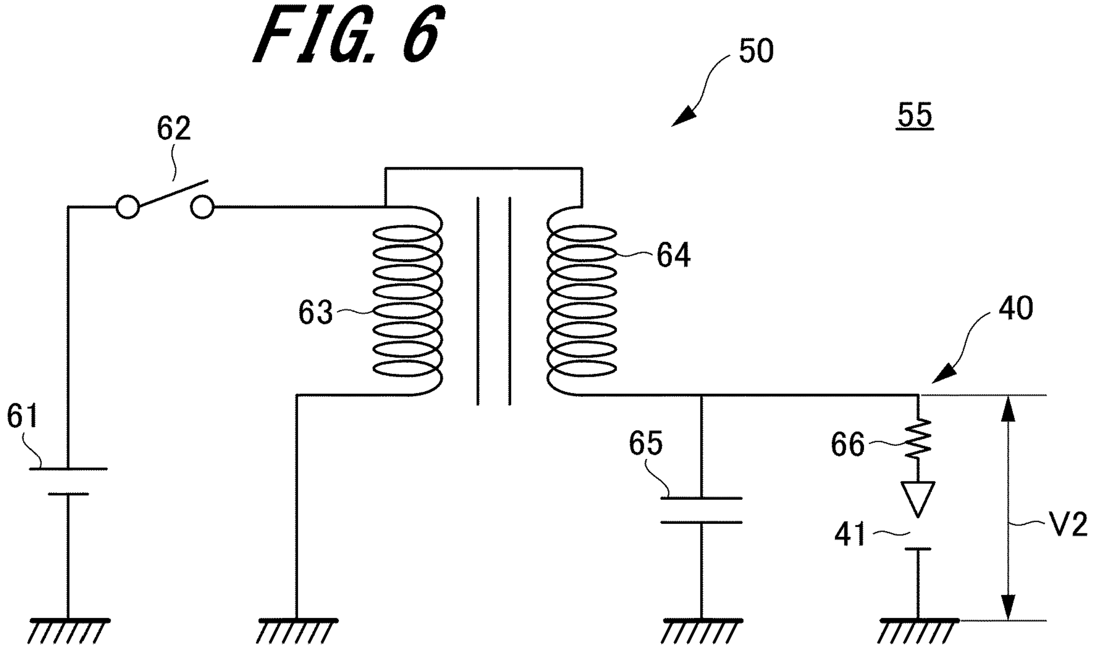
50
55
62
64
63
40
61
65
66
41
V2

FIG. 7

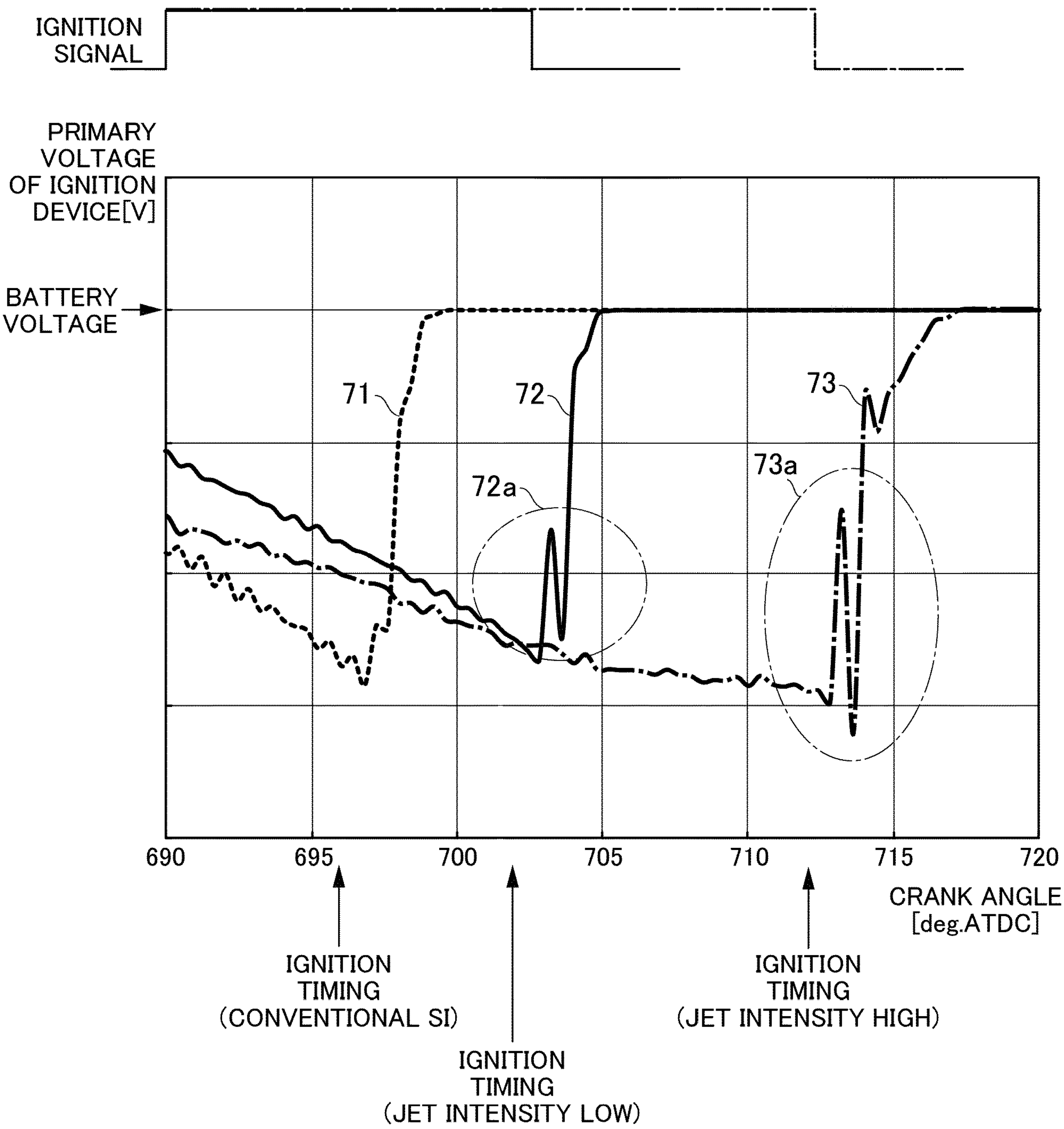
IGNITION
SIGNAL
PRIMARY
VOLTAGE
OF IGNITION
DEVICE[V]
BATTERY
VOLTAGE
71
72
73
72a
73a
690
695
700
705
710
715
720
CRANK ANGLE
[deg.ATDC]
IGNITION
TIMING
(CONVENTIONAL SI)
IGNITION
TIMING
(JET INTENSITY HIGH)
IGNITION
TIMING
(JET INTENSITY LOW)

FIG. 8

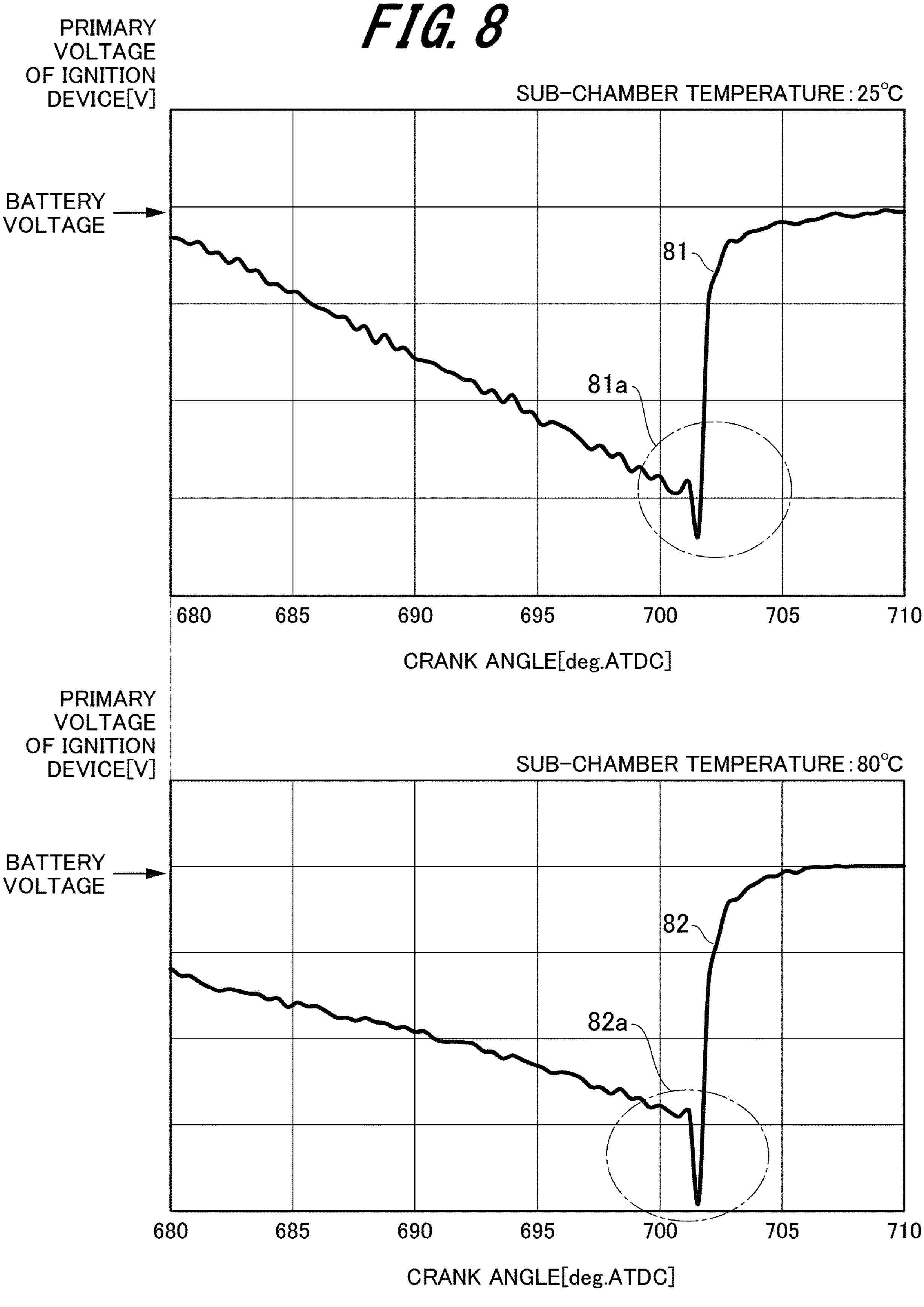
PRIMARY VOLTAGE OF IGNITION DEVICE[V]
SUB-CHAMBER TEMPERATURE : 25°C
BATTERY VOLTAGE
81
81a
680
685
690
695
700
705
710
CRANK ANGLE[deg.ATDC]
PRIMARY VOLTAGE OF IGNITION DEVICE[V]
SUB-CHAMBER TEMPERATURE : 80°C
BATTERY VOLTAGE
82
82a
680
685
690
695
700
705
710
CRANK ANGLE[deg.ATDC]

FIG. 9

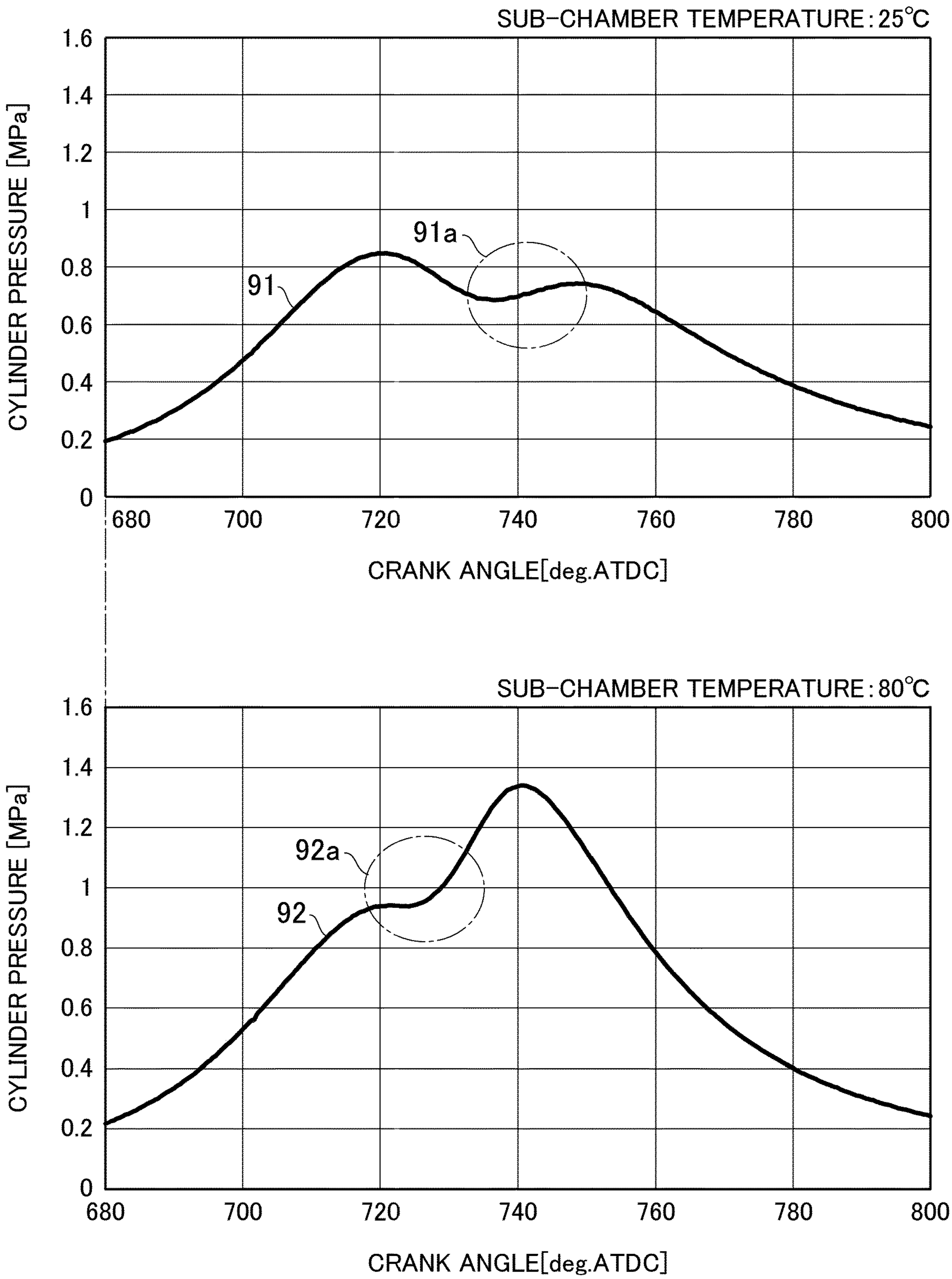
SUB-CHAMBER TEMPERATURE: 25°C
CYLINDER PRESSURE [MPa]
1.6
1.4
1.2
1
0.8
0.6
0.4
0.2
0
680
700
720
740
760
780
800
CRANK ANGLE[deg.ATDC]
91
91a
SUB-CHAMBER TEMPERATURE: 80°C
CYLINDER PRESSURE [MPa]
92
92a

FIG. 10

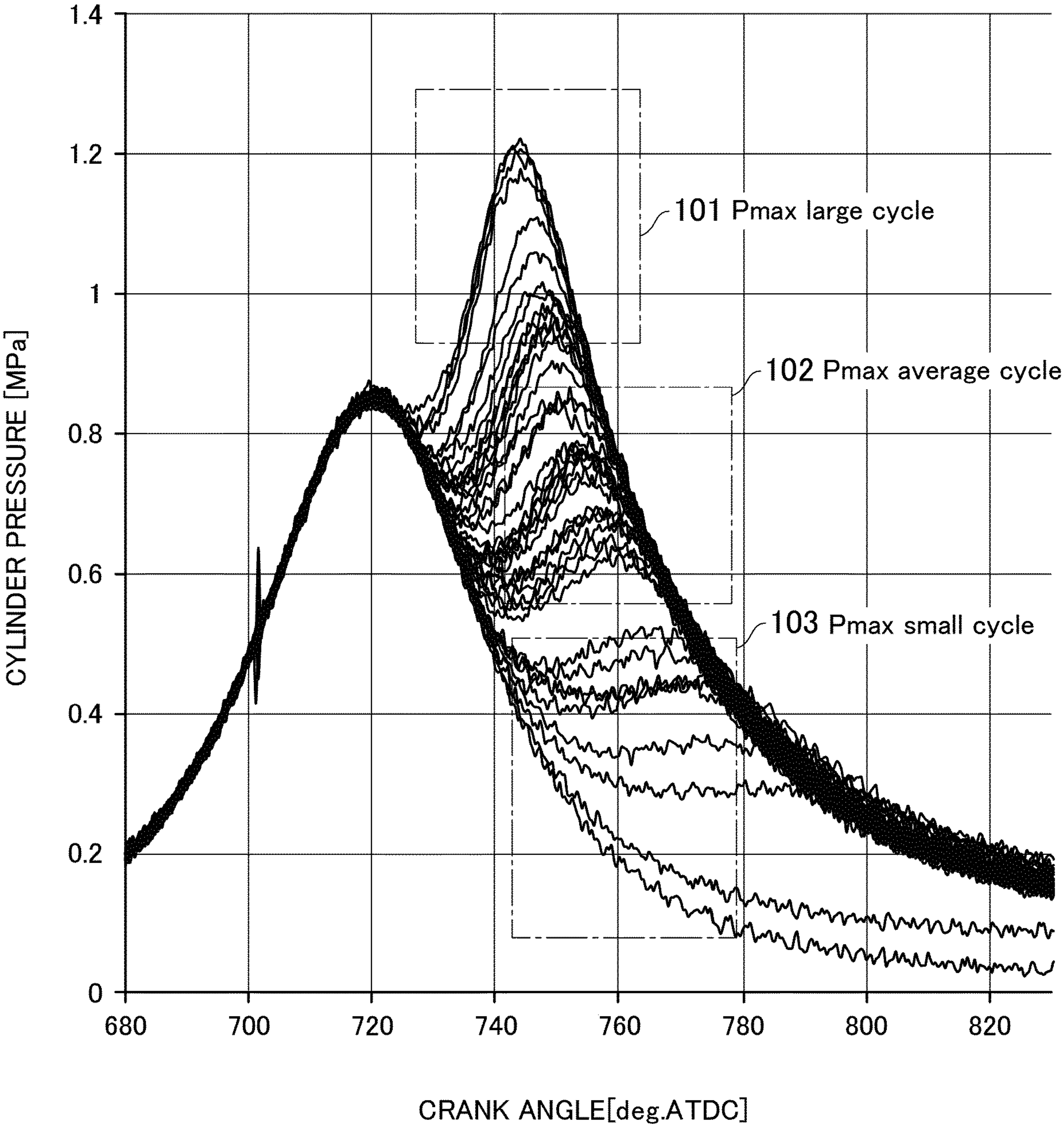
1.4
1.2
1
0.8
0.6
0.4
0.2
0
CYLINDER PRESSURE [MPa]
680
700
720
740
760
780
800
820
CRANK ANGLE[deg.ATDC]
101 Pmax large cycle
102 Pmax average cycle
103 Pmax small cycle

FIG. 11

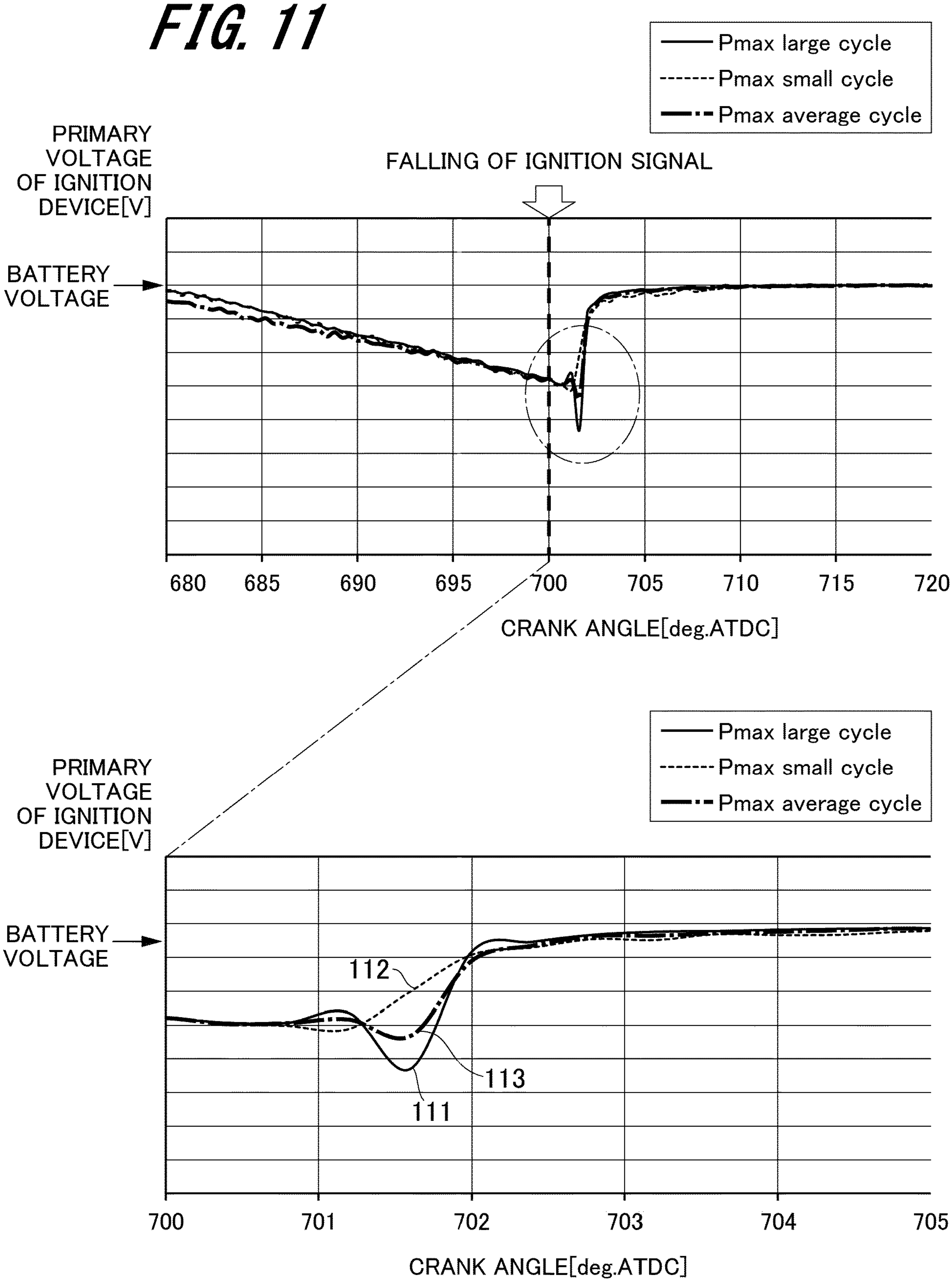
Pmax large cycle
Pmax small cycle
Pmax average cycle
PRIMARY VOLTAGE OF IGNITION DEVICE[V]
FALLING OF IGNITION SIGNAL
BATTERY VOLTAGE
680
685
690
695
700
705
710
715
720
CRANK ANGLE[deg.ATDC]
Pmax large cycle
Pmax small cycle
Pmax average cycle
PRIMARY VOLTAGE OF IGNITION DEVICE[V]
BATTERY VOLTAGE
112
113
111
700
701
702
703
704
705
CRANK ANGLE[deg.ATDC]

FIG. 12

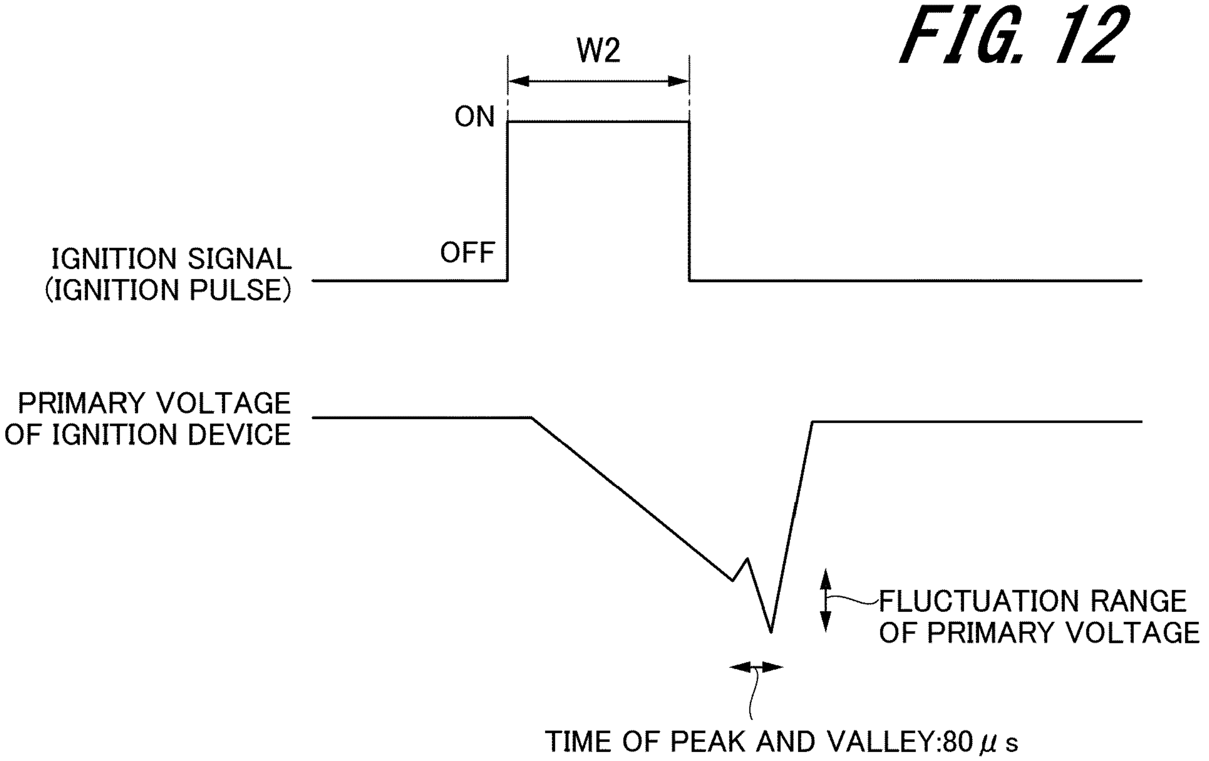
W2
ON
OFF
IGNITION SIGNAL
(IGNITION PULSE)
PRIMARY VOLTAGE
OF IGNITION DEVICE
FLUCTUATION RANGE
OF PRIMARY VOLTAGE
TIME OF PEAK AND VALLEY:80 μs

FIG. 13

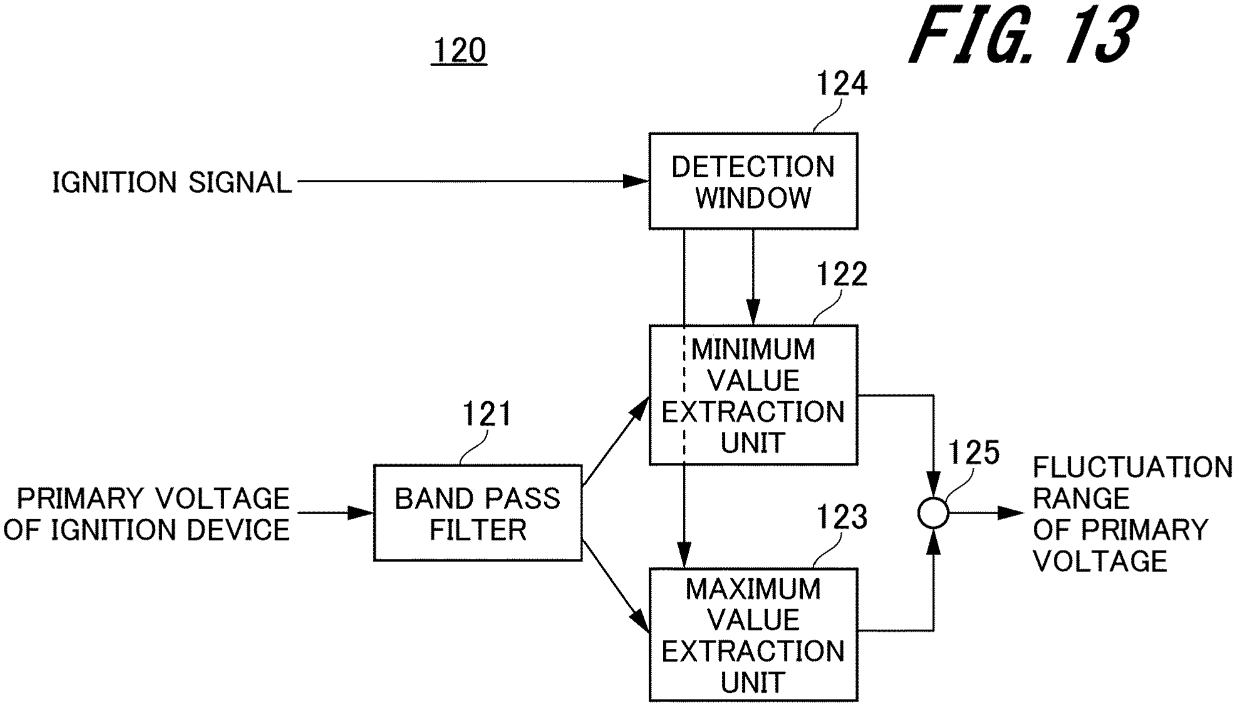
120
124
IGNITION SIGNAL
DETECTION
WINDOW
122
MINIMUM
VALUE
EXTRACTION
UNIT
121
125
FLUCTUATION
RANGE
OF PRIMARY
VOLTAGE
PRIMARY VOLTAGE
OF IGNITION DEVICE
BAND PASS
FILTER
123
MAXIMUM
VALUE
EXTRACTION
UNIT

FIG. 14

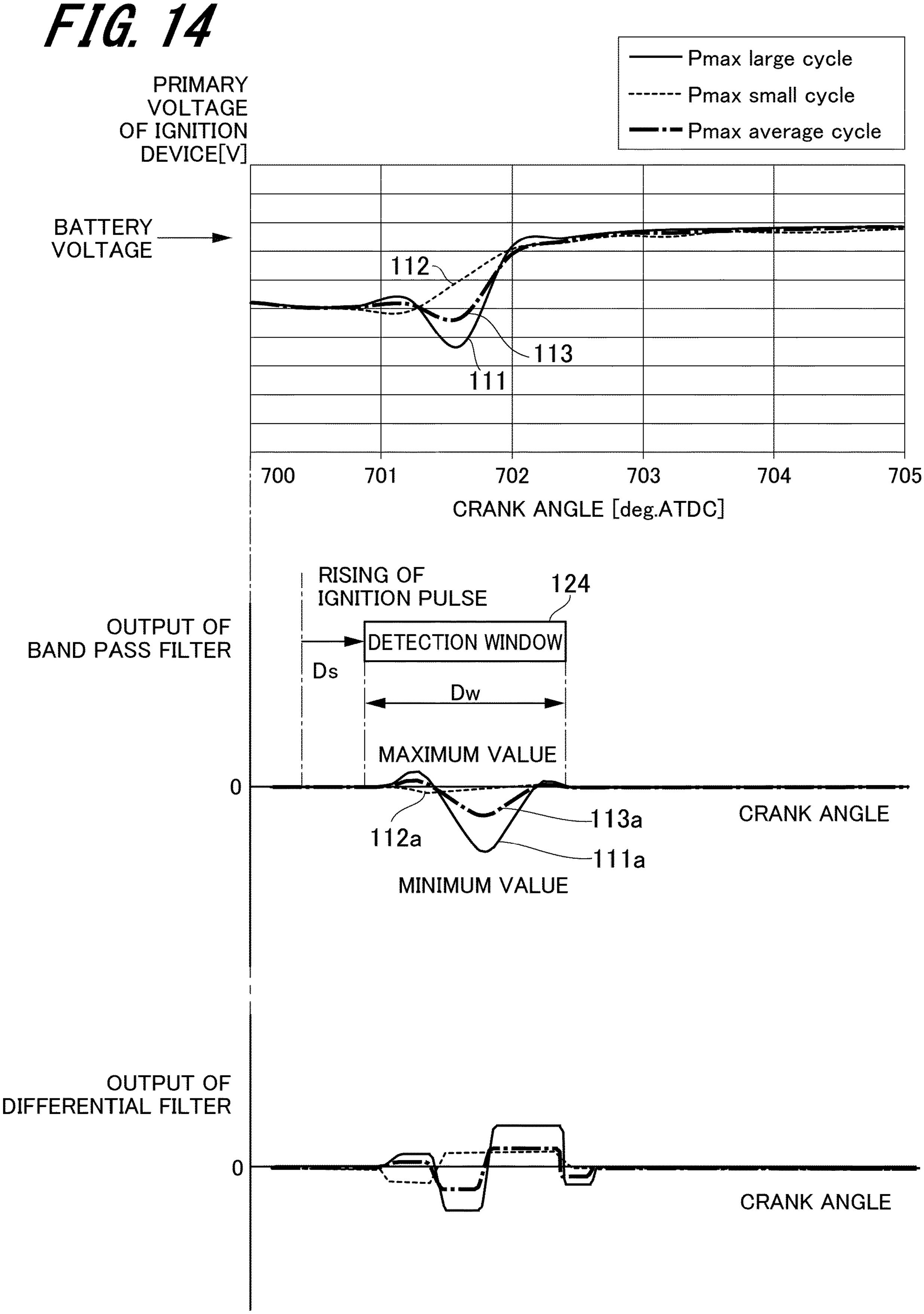
Pmax large cycle
Pmax small cycle
Pmax average cycle
PRIMARY VOLTAGE OF IGNITION DEVICE[V]
BATTERY VOLTAGE
112
113
111
700
701
702
703
704
705
CRANK ANGLE [deg.ATDC]
RISING OF IGNITION PULSE
124
OUTPUT OF BAND PASS FILTER
DETECTION WINDOW
Ds
Dw
MAXIMUM VALUE
0
113a
CRANK ANGLE
112a
111a
MINIMUM VALUE
OUTPUT OF DIFFERENTIAL FILTER
0
CRANK ANGLE

FIG. 15

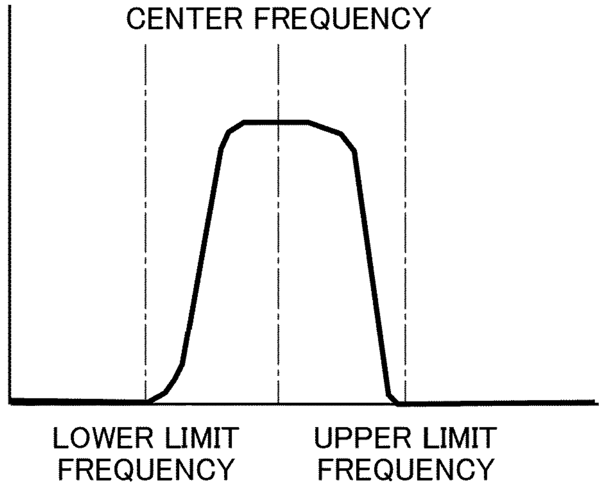
CENTER FREQUENCY
LOWER LIMIT FREQUENCY
UPPER LIMIT FREQUENCY

FIG. 16

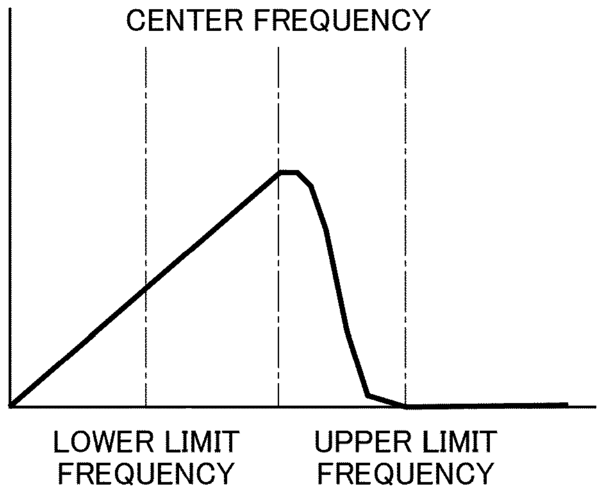
CENTER FREQUENCY
LOWER LIMIT FREQUENCY
UPPER LIMIT FREQUENCY

FIG. 17

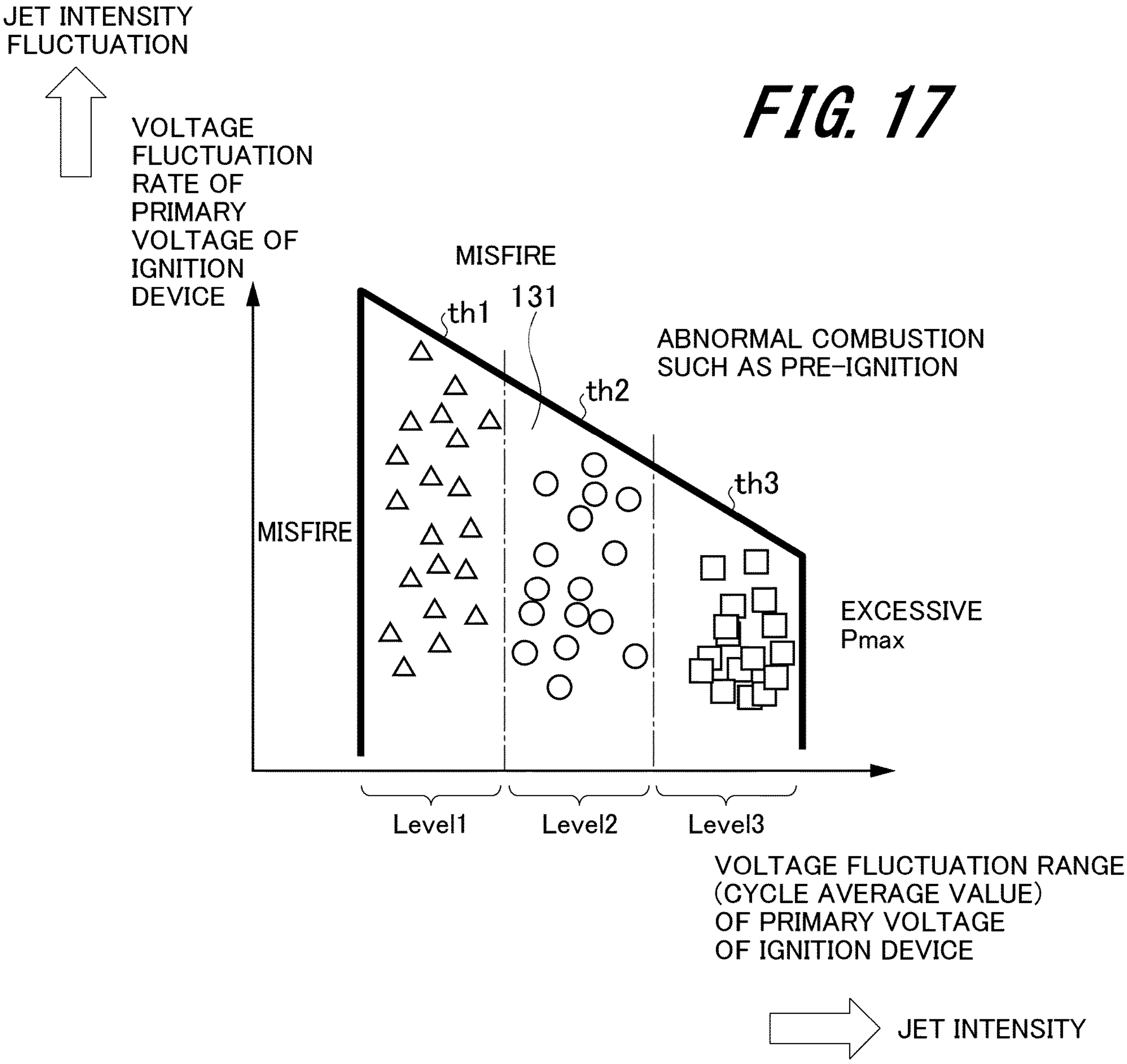
JET INTENSITY
FLUCTUATION
VOLTAGE
FLUCTUATION
RATE OF
PRIMARY
VOLTAGE OF
IGNITION
DEVICE
MISFIRE
131
th1
th2
th3
ABNORMAL COMBUSTION
SUCH AS PRE-IGNITION
MISFIRE
EXCESSIVE
Pmax
Level1
Level2
Level3
VOLTAGE FLUCTUATION RANGE
(CYCLE AVERAGE VALUE)
OF PRIMARY VOLTAGE
OF IGNITION DEVICE
JET INTENSITY

FIG. 18

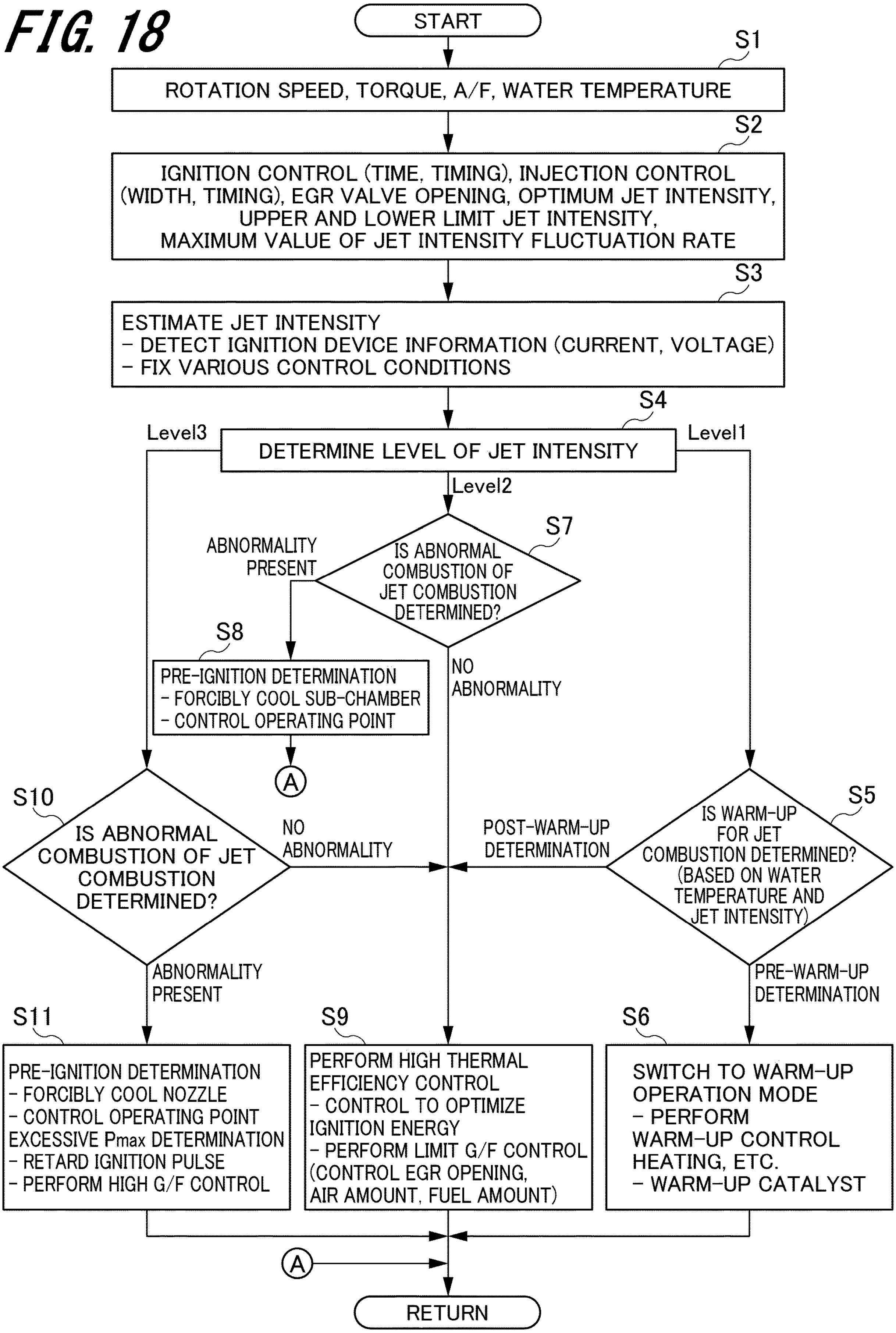
START
S1
ROTATION SPEED, TORQUE, A/F, WATER TEMPERATURE
S2
IGNITION CONTROL (TIME, TIMING), INJECTION CONTROL (WIDTH, TIMING), EGR VALVE OPENING, OPTIMUM JET INTENSITY, UPPER AND LOWER LIMIT JET INTENSITY, MAXIMUM VALUE OF JET INTENSITY FLUCTUATION RATE
S3
ESTIMATE JET INTENSITY
- DETECT IGNITION DEVICE INFORMATION (CURRENT, VOLTAGE)
- FIX VARIOUS CONTROL CONDITIONS
S4
DETERMINE LEVEL OF JET INTENSITY
Level3
Level1
Level2
S7
IS ABNORMAL COMBUSTION OF JET COMBUSTION DETERMINED?
ABNORMALITY PRESENT
NO ABNORMALITY
S8
PRE-IGNITION DETERMINATION
- FORCIBLY COOL SUB-CHAMBER
- CONTROL OPERATING POINT
A
S10
IS ABNORMAL COMBUSTION OF JET COMBUSTION DETERMINED?
NO ABNORMALITY
ABNORMALITY PRESENT
S5
IS WARM-UP FOR JET COMBUSTION DETERMINED? (BASED ON WATER TEMPERATURE AND JET INTENSITY)
POST-WARM-UP DETERMINATION
PRE-WARM-UP DETERMINATION
S11
PRE-IGNITION DETERMINATION
- FORCIBLY COOL NOZZLE
- CONTROL OPERATING POINT
EXCESSIVE Pmax DETERMINATION
- RETARD IGNITION PULSE
- PERFORM HIGH G/F CONTROL
S9
PERFORM HIGH THERMAL EFFICIENCY CONTROL
- CONTROL TO OPTIMIZE IGNITION ENERGY
- PERFORM LIMIT G/F CONTROL (CONTROL EGR OPENING, AIR AMOUNT, FUEL AMOUNT)
S6
SWITCH TO WARM-UP OPERATION MODE
- PERFORM WARM-UP CONTROL HEATING, ETC.
- WARM-UP CATALYST
A
RETURN

*FIG. 19*

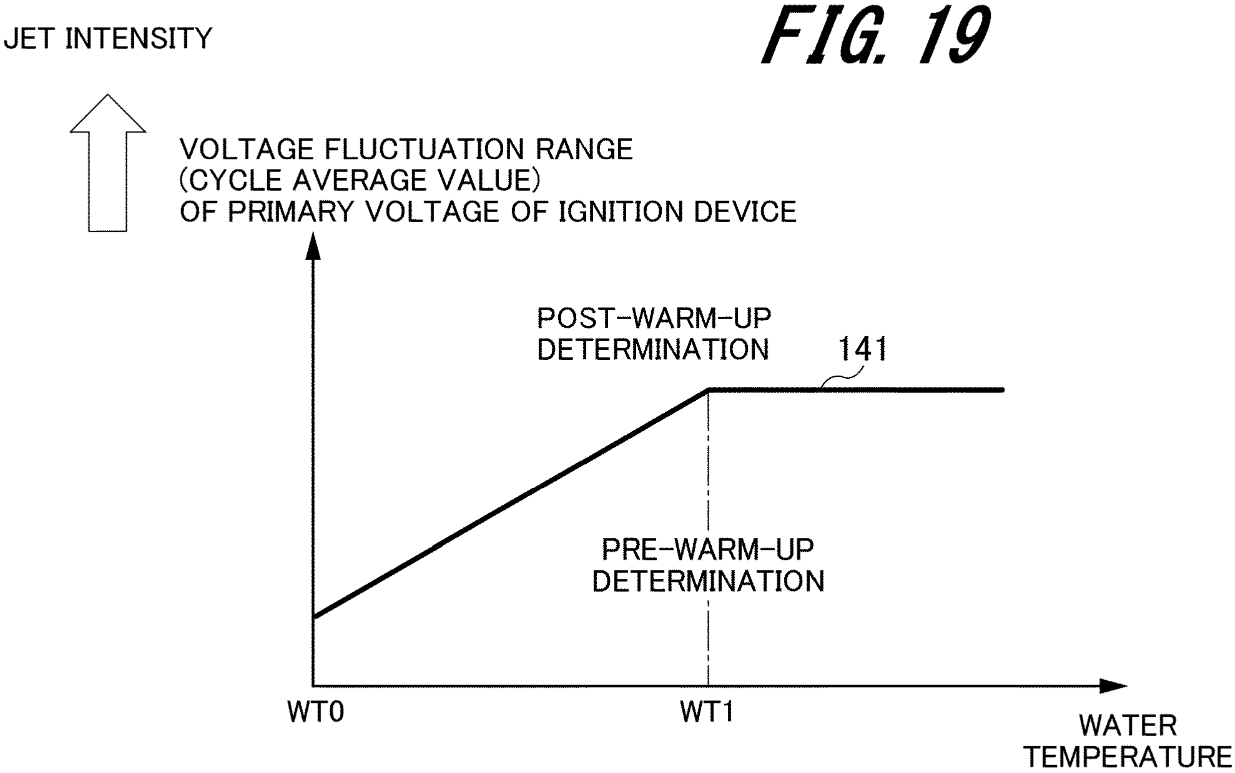
JET INTENSITY
VOLTAGE FLUCTUATION RANGE
(CYCLE AVERAGE VALUE)
OF PRIMARY VOLTAGE OF IGNITION DEVICE
POST-WARM-UP
DETERMINATION
141
PRE-WARM-UP
DETERMINATION
WT0
WT1
WATER
TEMPERATURE

FIG. 20

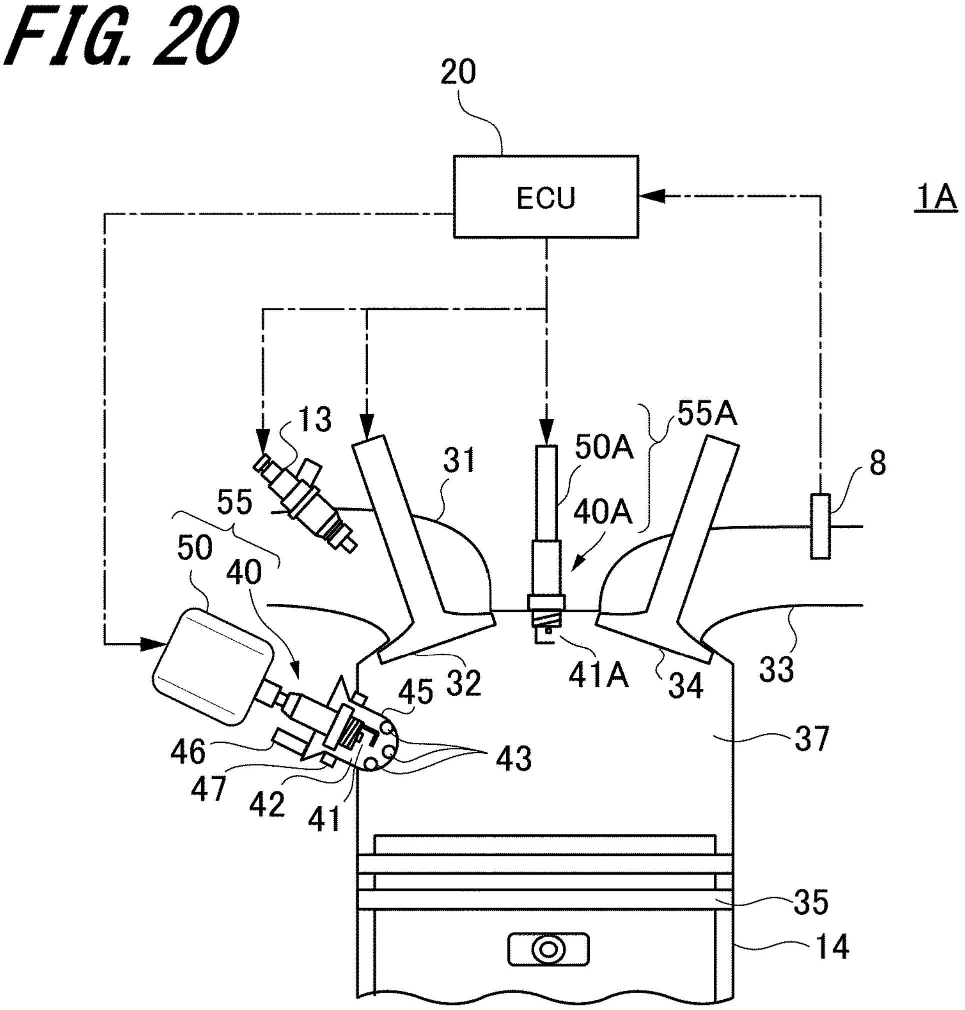
20
ECU
1A
13
55A
31
50A
8
55
40A
50
40
45
32
41A
34
33
37
46
43
47
42
41
35
14

FIG. 21

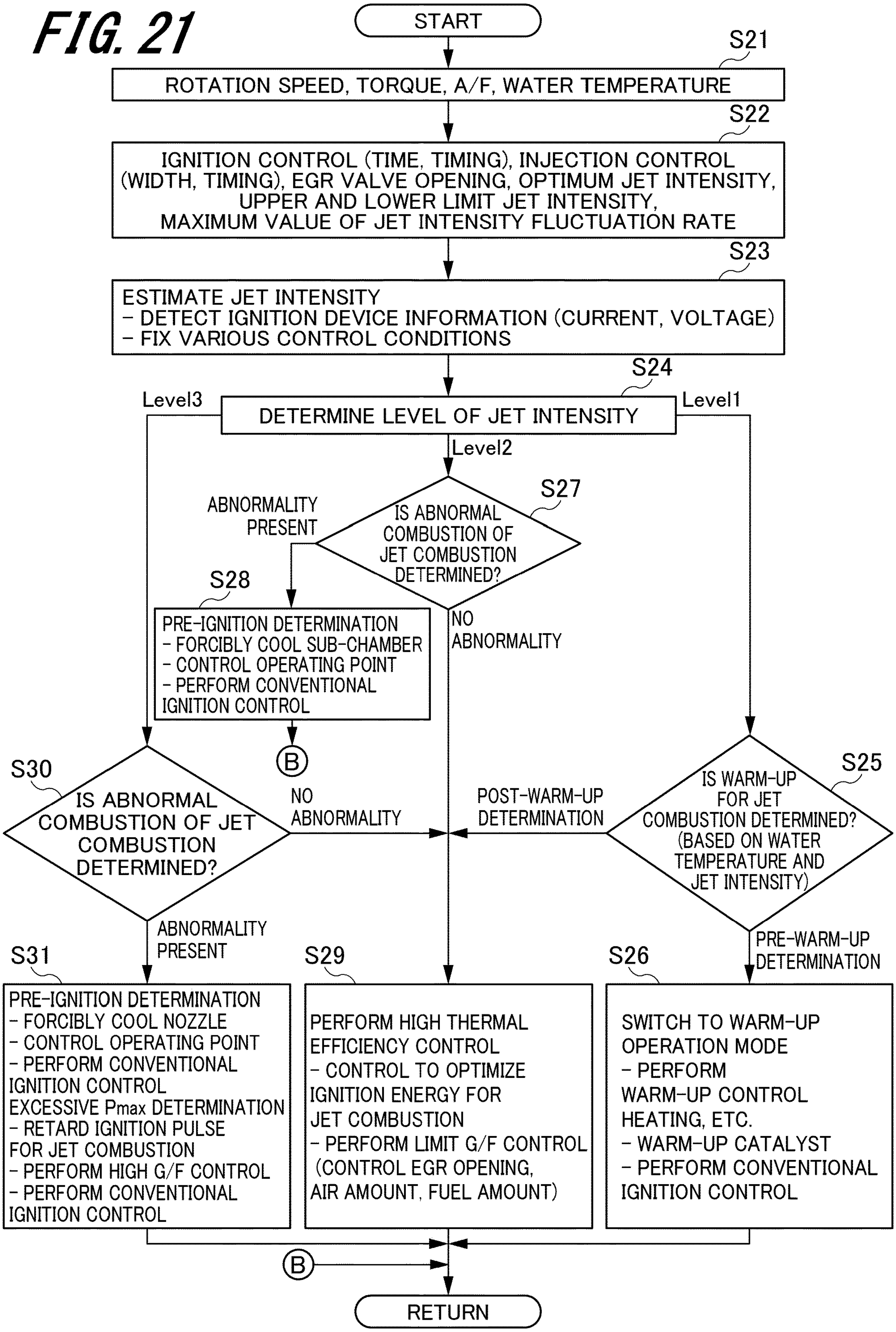
START
S21
ROTATION SPEED, TORQUE, A/F, WATER TEMPERATURE
S22
IGNITION CONTROL (TIME, TIMING), INJECTION CONTROL (WIDTH, TIMING), EGR VALVE OPENING, OPTIMUM JET INTENSITY, UPPER AND LOWER LIMIT JET INTENSITY, MAXIMUM VALUE OF JET INTENSITY FLUCTUATION RATE
S23
ESTIMATE JET INTENSITY
- DETECT IGNITION DEVICE INFORMATION (CURRENT, VOLTAGE)
- FIX VARIOUS CONTROL CONDITIONS
S24
DETERMINE LEVEL OF JET INTENSITY
Level3
Level2
Level1
S27
IS ABNORMAL COMBUSTION OF JET COMBUSTION DETERMINED?
ABNORMALITY PRESENT
NO ABNORMALITY
S28
PRE-IGNITION DETERMINATION
- FORCIBLY COOL SUB-CHAMBER
- CONTROL OPERATING POINT
- PERFORM CONVENTIONAL IGNITION CONTROL
B
S30
IS ABNORMAL COMBUSTION OF JET COMBUSTION DETERMINED?
NO ABNORMALITY
ABNORMALITY PRESENT
S25
IS WARM-UP FOR JET COMBUSTION DETERMINED? (BASED ON WATER TEMPERATURE AND JET INTENSITY)
POST-WARM-UP DETERMINATION
PRE-WARM-UP DETERMINATION
S31
PRE-IGNITION DETERMINATION
- FORCIBLY COOL NOZZLE
- CONTROL OPERATING POINT
- PERFORM CONVENTIONAL IGNITION CONTROL
EXCESSIVE Pmax DETERMINATION
- RETARD IGNITION PULSE FOR JET COMBUSTION
- PERFORM HIGH G/F CONTROL
- PERFORM CONVENTIONAL IGNITION CONTROL
S29
PERFORM HIGH THERMAL EFFICIENCY CONTROL
- CONTROL TO OPTIMIZE IGNITION ENERGY FOR JET COMBUSTION
- PERFORM LIMIT G/F CONTROL (CONTROL EGR OPENING, AIR AMOUNT, FUEL AMOUNT)
S26
SWITCH TO WARM-UP OPERATION MODE
- PERFORM WARM-UP CONTROL HEATING, ETC.
- WARM-UP CATALYST
- PERFORM CONVENTIONAL IGNITION CONTROL
B
RETURN

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011196342 A
- US 8006666 B2
- JP 2016094854 A